# EUROPEAN PATENT SPECIFICATION

(11) **EP 1 389 000 B1**
(45) Date of publication and mention of the grant of the patent: **21.12.2011**
(21) Application number: 03254828.1
(22) Date of filing: 01.08.2003
(51) Int. Cl.: H04N 1/00

(54) **Digital camera and printer**
Digitale Kamera und Drucker
Caméra numérique et imprimeur

(30) Priority: 05.08.2002 JP 2002228030; 16.07.2003 JP 2003197818
(43) Date of publication of application: 11.02.2004
(73) Proprietor: CANON KABUSHIKI KAISHA, Tokyo (JP)
(72) Inventor: Ogiwara, Satoshi, c/o Canon Kabushiki Kaisha, Ohta-ku, Tokyo (JP); Yamada, Akitoshi, c/o Canon Kabushiki Kaisha, Ohta-ku, Tokyo (JP)
(74) Representative: Hitching, Peter Matthew

(56) References cited:
- EP-A- 0 859 326
- JP-A- 58 161 564
- US-A- 5 438 345
- US-A1- 2001 013 949
- US-A1- 2001 040 684
- US-A1- 2002 085 242

## Description

### FIELD OF THE INVENTION

The present invention relates to a digital camera, a system comprising a printer directly communicating with a digital camera and a method of operating a digital camera capable of directly communicating with a printer.

### BACKGROUND OF THE INVENTION

Normally, upon printing an image sensed by a digital camera, the following processes are required. That is, an image stored in a recording medium of the digital camera is read by a personal computer (to be referred to as a PC hereinafter), and is printed by a connected printer using an application running on the PC.

That is, the flow of image data is digital camera → PC → printer, and possession of the PC is indispensable. Also, the PC must be started to print an image stored in a digital camera.

In consideration of such situation, a system in which a digital camera and printer are directly connected, and a print instruction is issued on a display normally equipped on the digital camera (to be referred to as photo direct print system hereinafter) has been proposed.

Merits of use of the photo direct print system are easy print without starting a PC and low system building cost since a PC is not indispensable. Upon connecting a digital camera to a printer, a display normally equipped on the digital camera is used as means for giving various instructions and, especially, for confirming an image to be printed. Hence, a printer does not require any special display used to confirm an image, and the cost can be further reduced.

However, in the conventional photo direct system, neither a technique for notifying a digital camera whether or not a printer which can directly communicate with the digital camera has a function of automatically detecting a paper size and the like, nor a technique for displaying, on the user interface of the digital camera, whether or not the printer has such function have been proposed. Also, no technique for facilitating selection of a paper size or the like using that function has been proposed.

The present invention has been made in consideration of the aforementioned problems, and is conceived with allowing the display, on a user interface of a digital camera, whether or not a printer which can directly communicate with the digital camera has a function of automatically detecting a paper size or the like.

EP-A-0859326 discloses a camera connected directly to a printer by a serial bus. The printer sends information via the bus to the camera on the data processing capability of the printer prior to the transfer.

### SUMMARY OF THE INVENTION

A first aspect of the invention provides a digital camera as claimed in claim 1.

A second aspect of the invention provides a printer as claimed in claim 4.

A third aspect of the invention provides a printer as claimed in claim 5.

A fourth aspect of the invention provides a printer as claimed in claim 6.

A fifth aspect of the invention provides a method of operating a digital camera as claimed in claim 8.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a schematic perspective view of a PD printer according to the first embodiment;
Fig. 2 is a schematic view of a control panel of the PD printer according to the first embodiment;
Fig. 3 is a block diagram showing the arrangement of principal part associated with control of the PD printer according to the first embodiment;
Fig. 4 is a block diagram showing the arrangement of an ASIC of the PD printer according to the first embodiment;
Fig. 5 is a view showing the connection state of the PD printer and a digital camera according to the first embodiment;
Fig. 6 is a view for explaining the software configurations of the PD printer and digital camera, which incorporate NCDP according to the first embodiment;
Fig. 7 is a view for explaining an outline of NCDP communication procedures according to the first embodiment;
Fig. 8 is a view for explaining commands in NCDP according to the first embodiment;
Fig. 9 is a chart for explaining a print sequence based on "BASIC PROCEDURE" in NCDP according to the first embodiment;
Fig. 10 is a chart for explaining a print sequence based on "RECOMMENDED PROCEDURE" in NCDP according to the first embodiment;
Fig. 11 is a chart for explaining a print sequence upon occurrence of an error in "RECOMMENDED PROCEDURE" in NCDP according to the first embodiment;
Fig. 12 is a view for explaining an example of Capability transmitted in NCDP according to the first embodiment;
Fig. 13 is a flow chart for explaining an outline of the NCDP communication procedures according to the first embodiment;
Fig. 14 is a view for explaining an example wherein a command (NCDPStart) that instructs to start the NCDP procedure is implemented using a PTP architecture;
Fig. 15 is a view for explaining an example wherein a procedure (ProcedureStart) that receives a transition command to respective procedures from the camera is implemented using the PTP architecture;
Fig. 16 is a view for explaining an example wherein a command (NCDPEnd) that instructs to end the NCDP procedure is implemented using the PTP architecture;
Fig. 17 is a view for explaining an example wherein a command (Capability) that transmits Capability from the PD printer to the camera in the NCDP procedure is implemented using the PTP architecture;
Fig. 18 is a view for explaining an example wherein a procedure of a command (GetImage) that acquires an image file held in the camera from the PD printer in the NCDP procedure is implemented using the PTP architecture;
Fig. 19 is a view for explaining an example wherein a procedure of a command (StatusSend) that transmits error status from the PD printer to the camera in the NCDP procedure is implemented using the PTP architecture;
Fig. 20 is a view for explaining an example wherein a procedure that transmits an end command (PageEnd) of a print process for one page from the PD printer to the camera in the NCDP procedure is implemented using the PTP architecture;
Fig. 21 is a view for explaining an example wherein a procedure that issues an end command (JobEnd) of a print job from the PD printer to the camera in the NCDP procedure is implemented using the PTP architecture;
Fig. 22 is a view for explaining an example wherein a procedure that issues a print command (JobStart) from the camera to the PD printer in the NCDP procedure is implemented using the PTP architecture;
Fig. 23 is a view for explaining an example wherein a procedure that issues a print abort command (JobAbort) from the camera to the PD printer in the NCDP procedure is implemented using the PTP architecture;
Fig. 24 is a view for explaining an example wherein a procedure that issues a print restart command (JobContinue) from the camera to the PD printer in the NCDP procedure is implemented using the PTP architecture;
Fig. 25 is a flow chart showing the negotiation procedure in the first embodiment;
Fig. 26 is a block diagram of a digital camera in the first embodiment;
Fig. 27 is a flow chart showing the processing sequence on the digital camera side upon receiving an inquiry (GetObjectHandles) of objects possessed by the digital camera in the first embodiment;
Figs. 28A and 28B show examples of a print condition setup menu; and
Fig. 29 is a flow chart showing an example of a sequence for displaying the print condition menu.

### DETAILED DESCRIPTION OF THE PREFERRED EMBODIMENTS

Preferred embodiments of the present invention will be described hereinafter with reference to the accompanying drawings.

### (First Embodiment)

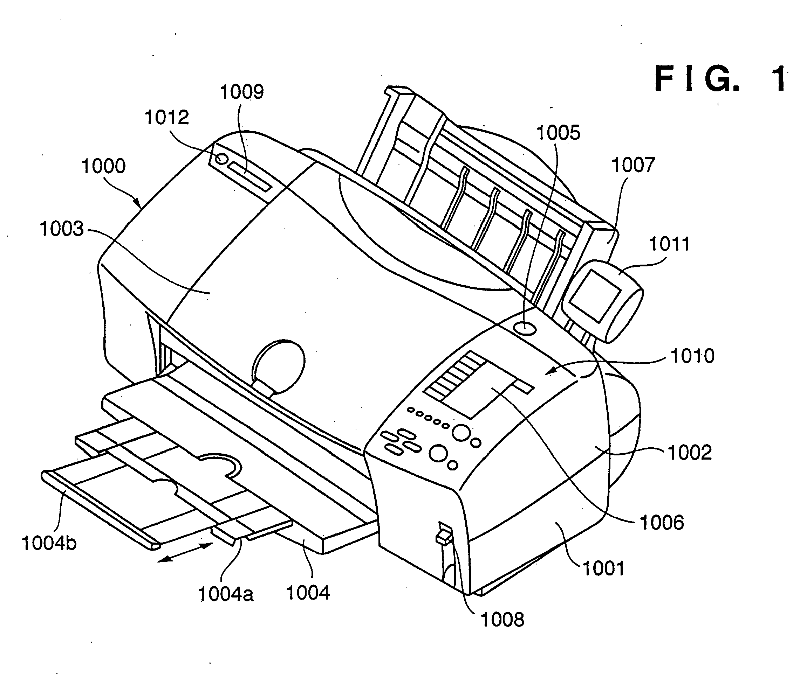

Fig. 1 is a schematic perspective view of a photo direct printer apparatus (to be referred to as a PD printer hereinafter) 1000 according to an embodiment of the present invention. This PD printer 1000 has a function of printing data received from a host computer (PC) as a normal PC printer, a function of printing image data directly read from a storage medium such as a memory card or the like, and a function of printing image data received from a digital camera.

Referring to Fig. 1, a main body which forms a housing of the PD printer 1000 according to the first embodiment has a lower case 1001, upper case 1002, access cover 1003, and exhaust tray 1004 as exterior members. The lower case 1001 nearly forms the lower half portion of the PD printer 1000, and the upper case 1002 nearly forms the upper half portion of the main body. By combining these cases, a hollow structure which has a storage space that stores mechanisms to be described later is formed. Openings are respectively formed on the upper and front surfaces of the main body. One end portion of the exhaust tray 1004 is rotatably held by the lower case 1001, and rotation of the tray 1004 opens/closes the opening formed on the front surface of the lower case 1001. For this reason, upon making the printer apparatus execute a print process, the exhaust tray 1004 is rotated toward the front surface side to open the opening, so that paper sheets can be exhausted from the opening. The exhausted paper sheets are stacked on the exhaust trays 1004 in turn. The exhaust tray 1004 stores two auxiliary trays 1004a and 1004b. When these auxiliary trays are pulled out as needed, the loading area of paper sheets can be enlarged/reduced in three steps.

One end portion of the access cover 1003 is rotatably held by the upper case 1002 to be able to open/close the opening formed on the upper surface of the main body. When the access cover 1003 is opened, a printhead cartridge (not shown), ink tanks (not shown), or the like housed in the main body can be exchanged. Although not shown, when the access cover 1003 is opened/closed, a projection formed on the rear surface of the cover 1003 rotates a cover open/close lever. By detecting the rotation position of that lever using a microswitch or the like, the open/close state of the access cover 1003 is detected.

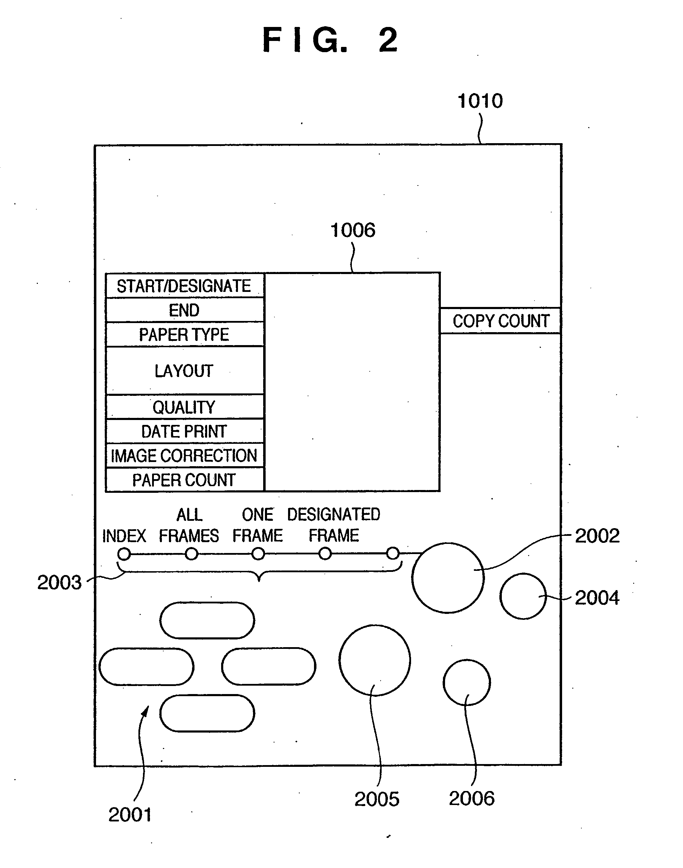

A power key 1005 is arranged on the upper surface of the upper case 1003 so that the user can press it. A control panel 1010 which comprises a liquid crystal display 1006, various key switches, and the like is provided on the right side of the upper case 1002. The structure of the control panel 1010 will be described in detail later with reference to Fig. 2. Reference numeral 1007 denotes an automatic feeder which automatically feeds a paper sheet into the apparatus main body. Reference numeral 1008 denotes a paper gap select lever which is used to adjust the gap between the printhead and paper sheet. Reference numeral 1009 denotes a card slot which receives an adapter that can receive a memory card. Via this adapter, image data stored in the memory card can be directly fetched and printed. As this memory card (PC card), for example, a compact flash® memory card, smart media card, memory stick, and the like are available. Reference numeral 1011 denotes a viewer (liquid crystal display unit) which is detachable from the main body of this PD printer 1000, and is used to display an image for one frame, index image, and the like, when the user wants to search images stored in the PC card for an image to be printed. Reference numeral 1012 denotes a USB terminal used to connect a digital camera (to be described later). Also, another USB connector used to connect a personal computer (PC) is provided on the rear surface of this PD printer 1000.

Fig. 2 is a schematic view of the control panel 1010 of the PD printer 1000 according to the first embodiment.

Referring to Fig. 2, a liquid crystal display unit 1006 displays menu items used to set data associated with item names printed on the right and left sides of the unit 1006. The menu items include, e.g., an item indicating the first frame number of photos to be printed or a designated frame number of photograph to be printed (START/DESIGNATE), an item indicating the last frame number of photos to be printed (END), an item indicating the number of copies to be printed (COPY COUNT), an item indicating the type of paper sheet used in a print process (PAPER TYPE), an item indicating the number of photos to be printed in one paper sheet (LAYOUT), an item indicating a print quality (QUALITY), an item indicating whether or not to print a photographing date (DATE PRINT), an item indicating whether or not to print a photo after correction (IMAGE CORRECTION), an item indicating the number of paper sheets required for printing (PAPER COUNT), and the like.

These items are selected or designated using cursor keys 2001. Reference numeral 2002 denotes a mode key. Every time this key is pressed, the type of print (INDEX, ALL FRAMES, ONE FRAME, and the like) can be switched, and a corresponding one of LEDs 2003 is turned on in accordance with the selected type of print. Reference numeral 2004 denotes a maintenance key which is used to do maintenance of the printer (e.g., cleaning of the printhead, and the like). Reference numeral 2005 denotes a print start key which is pressed when the start of a print process is instructed or when the maintenance setup is settled. Reference numeral 2006 denotes a print cancel key which is pressed when a print process or maintenance is canceled.

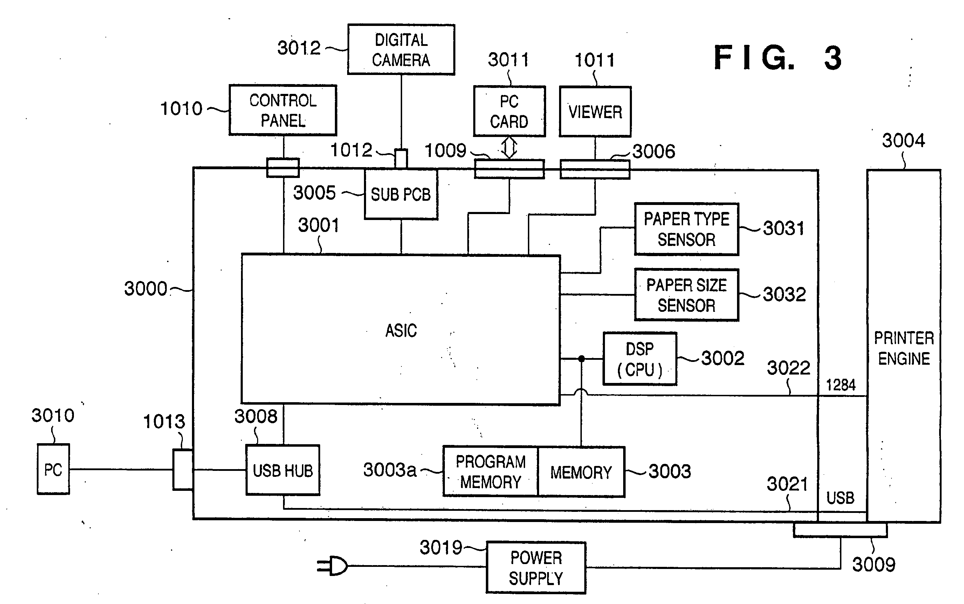

The arrangement of principal part associated with the control of the PD printer 1000 of the first embodiment will be described below with reference to Fig. 3. Note that the same reference numerals in Fig. 3 denote parts common to those in the above drawings, and a description thereof will be omitted.

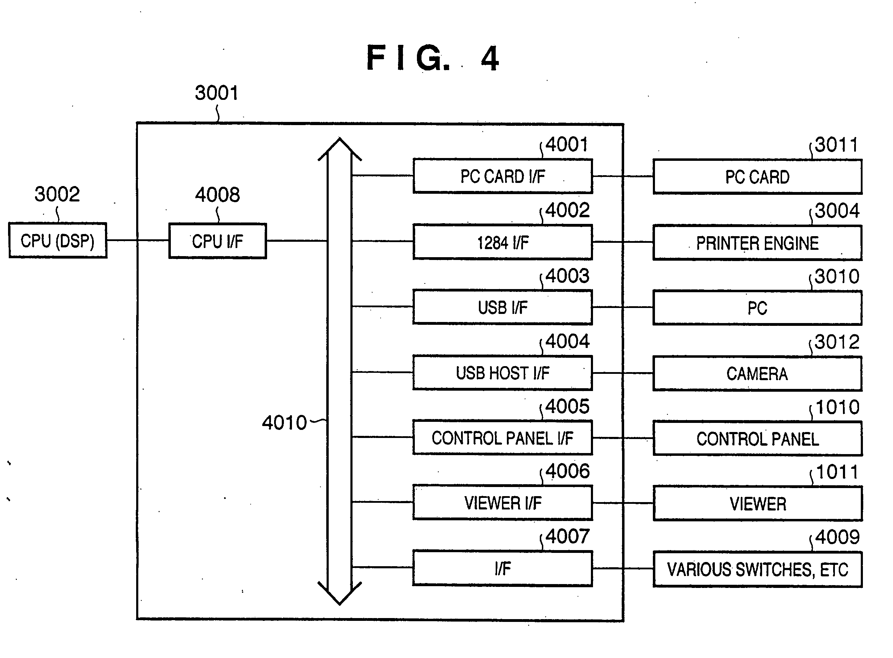

Referring to Fig. 3, reference numeral 3000 denotes a controller (control board). Reference numeral 3001 denotes an ASIC (dedicated custom LSI). The arrangement of the ASIC 3001 will be described later with reference to the block diagram of Fig. 4. Reference numeral 3002 denotes a DSP (digital signal processor), which includes a CPU and executes various control processes to be described later, and image processes such as conversion from a luminance signal (RGB) into a density signal (CMYK), scaling, gamma conversion, error diffusion, and the like. Reference numeral 3003 denotes a memory, which has a memory area that serves as a program memory 3003a for storing a control program to be executed by the CPU of the DSP 3002, a RAM area for storing a running program, and a work area for storing image data and the like. Reference numeral 3004 denotes a printer engine. In this embodiment, the printer is equipped with a printer engine of an ink-jet printer which prints a color image using a plurality of color inks. Reference numeral 3005 denotes a USB connector as a port for connecting a digital camera 3012. Reference numeral 3006 denotes a connector for connecting the viewer 1011. Reference numeral 3008 denotes a USB hub. When the PD printer 1000 executes a print process based on image data from a PC 3010, the USB hub 3008 allows data received from the PC 3010 to pass through it, and outputs the data to the printer engine 3004 via a USB 3021. In this way, the PC 3010 connected to the printer apparatus can execute a print process by directly exchanging data, signals, and the like with the printer engine 3004 (the printer apparatus serves as a normal PC printer). Reference numeral 3009 denotes a power supply connector, which inputs a DC voltage which is converted from commercial AC power by a power supply 3019. The PC 3010 is a general personal computer. Reference numeral 3011 denotes a memory card (PC card) mentioned above; and 3012, a digital camera (to be also referred to as a DSC: Digital Still Camera).

Reference numeral 3031 denotes a sensor (to be referred to as a paper type sensor hereinafter) for automatically detecting the type of paper sheets (normal paper, photo paper (glossy paper suited to print an image), and the like) set on the PD printer 1000. Reference numeral 3032 denotes a sensor (to be referred to as a paper size sensor hereinafter) for automatically detecting the size of paper sheets (L size, 2L size, card size, A4 size, postcard size, letter size, and the like) set on the PD printer 1000.

Note that signals are exchanged between this controller 3000 and printer engine 3004 via the USB 3021 or an IEEE1284 bus 3022.

Fig. 4 is a block diagram showing the arrangement of the ASIC 3001. In Fig. 4 as well, the same reference numerals denote parts common to those in the above drawings, and a description thereof will be omitted.

Reference numeral 4001 denotes a PC card interface, which is used to read image data stored in the inserted PC card 3011, and to write data in the PC card 3011. Reference numeral 4002 denotes an IEEE1284 interface, which is used to exchange data with the printer engine 3004. This IEEE1284 interface 4002 is a bus used when image data stored in the digital camera 3012 or PC card 3011 is to be printed. Reference numeral 4003 denotes a USB interface, which exchanges data with the PC 3010. Reference numeral 4004 denotes a USB host interface, which exchanges data with the digital camera 3012. Reference numeral 4005 denotes a control panel interface, which receives various operation signals from the control panel 1010, and outputs display data to the display unit 1006. Reference numeral 4006 denotes a viewer interface, which controls display of image data on the viewer 1011. Reference numeral 4007 denotes an interface, which controls interfaces with various switches, LEDs 4009, and the like. Reference numeral 4008 denotes a CPU interface, which exchanges data with the DSP 3002. Reference numeral 4010 denotes an internal bus (ASIC bus), which interconnects these interfaces.

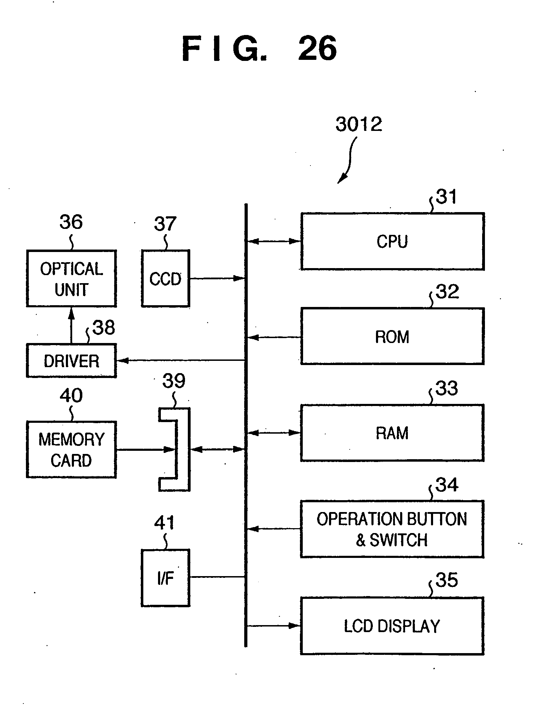

Fig. 26 is a block diagram of the DSC 3012 in the first embodiment. Note that a brief explanation will be given since the hardware itself is known to those who are skilled in the art (firmware is compatible to NCDP).

Referring to Fig. 26, reference numeral 31 denotes a CPU which controls the overall DSC 3012; and 32, a ROM that stores the processing sequence (firmware) of the CPU 31 (note that the ROM comprises a rewritable nonvolatile memory (e.g., a flash memory) since the firmware version is updated as needed). Reference numeral 33 denotes a RAM which is used as a work area of the CPU 31; and 34, a switch group used to make various operations. Reference numeral 35 denotes a liquid crystal display, which is used to confirm a sensed image, and to display a menu upon making various setups. In the first embodiment, these components 34 and 35 serve as a user interface of the whole system when the DSC serves as a member of the direct print system. Reference numeral 36 denotes an optical unit which mainly comprises a lens and its drive system. Reference numeral 37 denotes a CCD element; and 38, a driver which controls the optical unit 36 under the control of the CPU 31. Reference numeral 39 denotes a connector that receives a storage medium 40 (compact flash@ memory card, smart media card, or the like); and 41, a USB interface (the slave side of the USB) used to connect the PC or PD printer 1000 of the first embodiment.

The arrangements of the PD printer 1000 and DSC 3012 of the first embodiment have been explained. An outline of the operation based on the above arrangement will be explained below.

### <Normal PC Printer Mode>

This mode is a print mode for printing an image on the basis of print data sent from the PC 3010.

In this mode, when data from the PC 3010 is input via the USB connector 1013 (Fig. 3), it is directly sent to the printer engine 3004 via the USB hub 3008 and USB 3021, and a print process is executed based on the data from the PC 3010.

### <Direct Print Mode from PC Card>

When the PC card 3011 is attached to or detached from the card slot 1009, an interrupt is generated, and the DSP 3002 can detect based on this interrupt whether or not the PC card 3011 is attached or detached (removed). When the PC card 3011 is attached, compressed image data (e.g., compressed by JPEG) stored in that PC card 3011 is read and stored in the memory 3003. After that, the compressed image data is decompressed, and is stored in the memory 3003 again. When the user has issued a print instruction of that stored data, the image data is converted into print data that can be printed by the printer engine 3004 by executing conversion from RGB signals into YMCK signals, gamma correction, error diffusion, and the like, and the print data is output to the printer engine 3004 via the IEEE1284 interface 4002, thus printing an image.

### <Direct Print Mode from Camera>

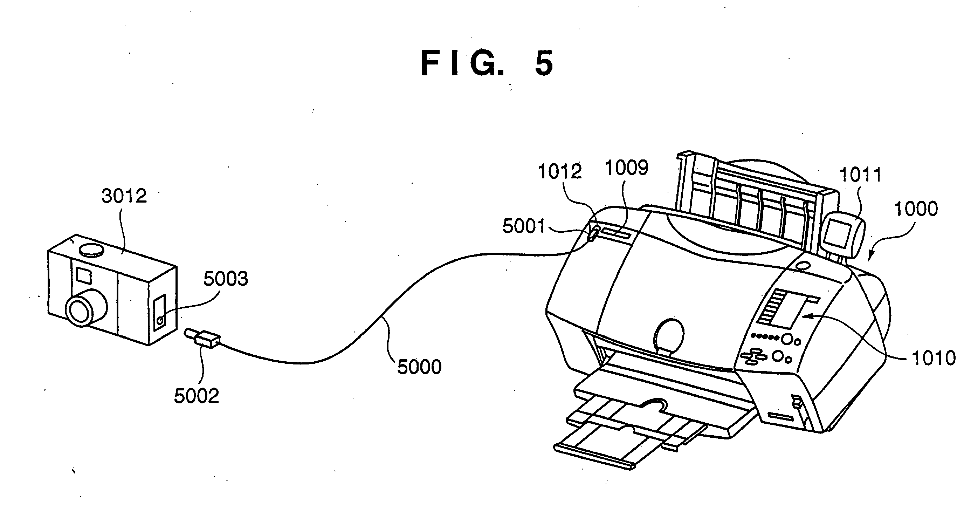

Fig. 5 shows the connection state of the PD printer 1000 and digital camera 3012 according to the first embodiment.

Referring to Fig. 5, a cable 5000 comprises a connector 5001 which is connected to the connector 1012 of the PD printer 1000, and a connector 5002 which is connected to a connector 5003 of the digital camera 3012. The digital camera 3012 can output image data stored in its internal memory via the connector 5003. Note that the digital camera 3012 can adopt various arrangements, e.g., an arrangement that comprises an internal memory as storage means, an arrangement that comprises a slot for receiving a detachable memory card, and so forth. When the PD printer 1000 and digital camera 3012 are connected via the cable 5000 shown in Fig. 5, image data output from the digital camera 3012 can be directly printed by the PD printer 1000.

When the digital camera 3012 is connected to the PD printer 1000, as shown in Fig. 5, and the control enters a direct print mode as a result of negotiation, a camera mark alone is displayed on the display unit 1006 on the control panel 1010, display and operations on the control panel 1010 are disabled, and display on the viewer 1011 is also disabled. Therefore, since only key operations at the digital camera 3012 and image display on a display unit (not shown) of the digital camera 3012 are enabled, the user can designate print setups using that digital camera 3012. Also, any errors which may be caused upon operations of the digital camera 3012 and the control panel of the PD printer 1000 at the same time can be prevented.

The first embodiment proposes NCDP (New Camera Direct Print) which makes communication control between the PD printer 1000 and digital camera 3012 using a versatile file and versatile format, and is independent from interfaces.

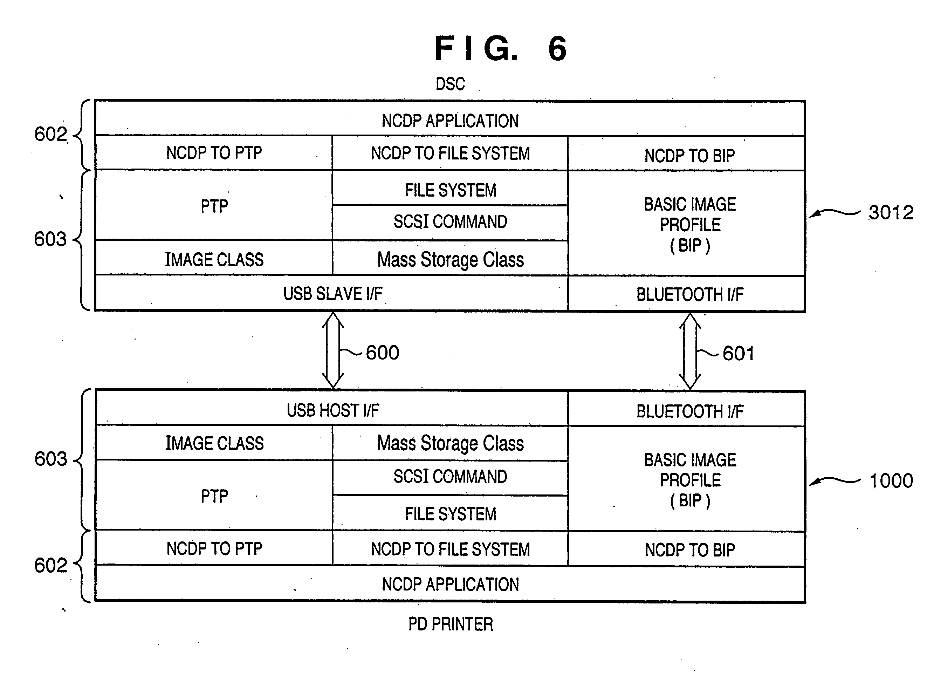

Fig. 6 shows an example of the configuration of this NCDP.

Referring to Fig. 6, reference numeral 600 denotes a USB interface; and 601, a Bluetooth interface. Reference numeral 602 denotes an application layer which is built in upon forming a system based on NCDP. Reference numeral 603 denotes a layer that implements existing protocols and interfaces. In Fig. 6, PTP (Picture Transfer Protocol), SCSI, BIP (Basic Image Profile) of Bluetooth, and the like are installed. The NCDP according to the first embodiment is premised on installation as an application on the architecture of the above protocol layer. In this case, the PD printer 1000 is specified as a USB host, the digital camera 3012 is specified as a USB device; they have the same NCDP configurations, as shown in Fig. 6.

As will be described in detail later, a merit of use of the NCDP of the first embodiment lies in that when the PD printer 1000 and DSC 3012 exchange information with each other at the time of and after making transition to NCDP, a file (e.g., text file) which describes a series of pieces of information and a series of operation procedures as a script is generated, that file is sent to a partner device, and the receiving side interprets the received script to execute processes. As a result, when arbitrary information is to be sent to the partner side, if that information consists of a plurality of elements, individual elements need not be exchanged by handshake, and the overhead upon information transfer can be reduced, thus improving the information transfer efficiency. For example, assume that there are a plurality of images to be printed on the DSC 3012 side. In such case, if the user selects images to be printed as much as he or she wants, and sets print conditions for these images, a series of print procedures can be described as a script, which is sent to the PD printer 1000. The PD printer 1000 interprets the received script to execute processes.

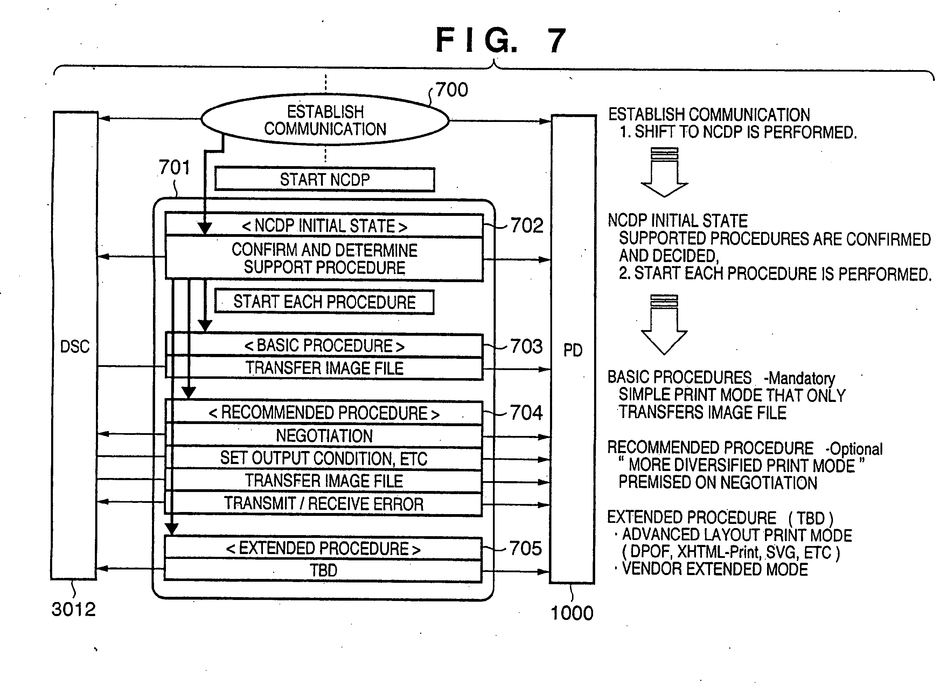

Fig. 7 is a view for explaining the flow of communication procedures between the PD printer 1000 and DSC 3012 on the basis of the NCDP according to the first embodiment.

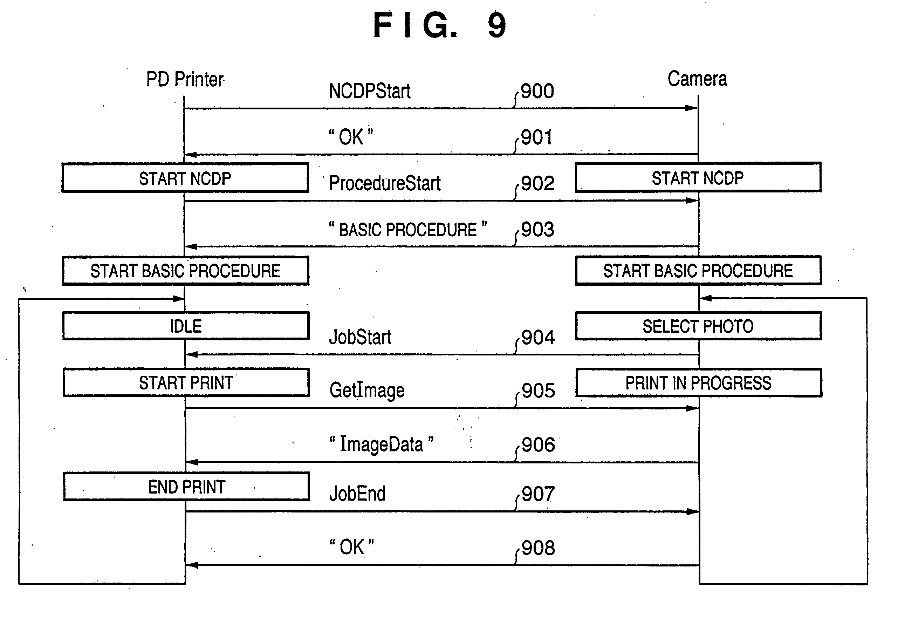

In this case, when it is detected that the PD printer 1000 and DSC 3012 are connected via the USB cable 5000, as shown in Fig. 5, a communication between these devices is allowed. As a result, applications installed in these devices are executed to start transition to procedures 701 based on the NCDP. Reference numeral 702 denotes an initial state of the NCDP. In this state, it is determined whether or not each other's models can implement the NCDP. If the NCDP can be implemented, the devices make transition to the procedures 701. If the DSC 3012 does not install any NCDP, no communication control based on the NCDP is executed. After transition to the NCDP is made in this way, when the DSC 3012 issues a transfer/print instruction of image data based on "BASIC PROCEDURE", as indicated by 703, the control shifts to a simple print mode in which an image file is transferred from the DSC 3012 to the PD printer 1000, and is printed. On the other hand, when the DSC 3012 issues a transfer/print instruction of image data based on "RECOMMENDED PROCEDURE", as indicated by 704, the control shifts to a print mode corresponding to diversified functions, in which the DSC 3012 and PD printer 1000 make various negotiations to determine the print condition and the like, an image file is transferred from the DSC 3012 to the PD printer 1000, and the transferred image file is printed. Furthermore, when the DSC 3012 issues a transfer/print instruction of image data based on "EXTENDED PROCEDURE", as indicated by 705, a mode that executes a print process using an advanced layout function such as DPOF, XHTML-print, SVG, or the like and specifications unique to each vendor is set. Note that the detailed specifications based on this "EXTENDED PROCEDURE" are specified in thespecifications of each individual DSC manufacturer, and a description thereof will be omitted. Note that the image print processes based on these "BASIC PROCEDURE" and "RECOMMENDED PROCEDURE" will be described later with reference to Figs. 9 to 11.

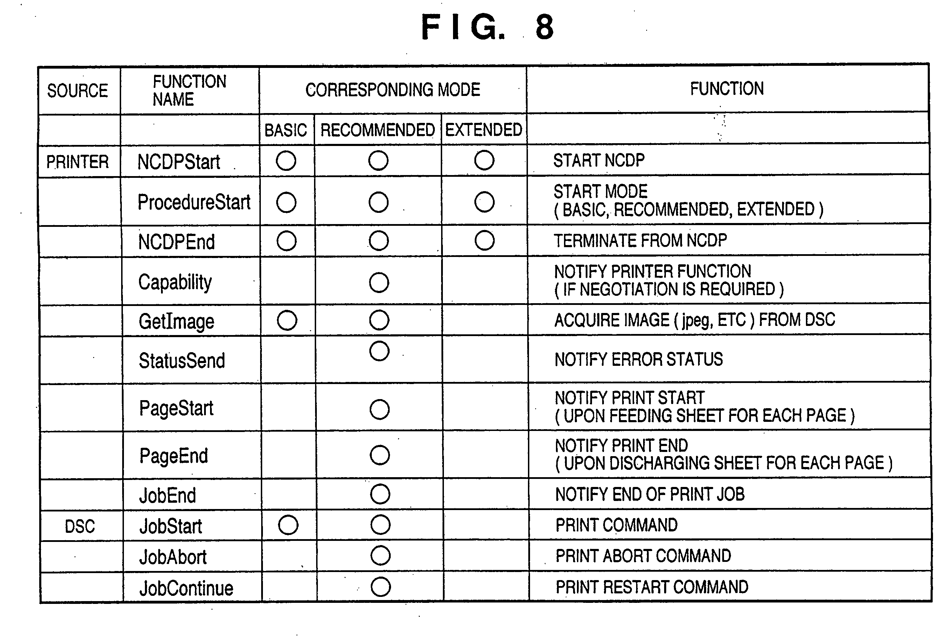

Fig. 8 is a view for explaining print commands in the NCDP according to the first embodiment.

Referring to Fig. 8, "corresponding mode" corresponds to the above "BASIC PROCEDURE", "RECOMMENDED PROCEDURE", and "EXTENDED PROCEDURE" designated by the DSC 3012. In "RECOMMENDED PROCEDURE", all commands can be used. However, since "BASIC PROCEDURE" is a simple print mode, only NCDP start and end commands , a shift command to each of "BASIC PROCEDURE", "RECOMMENDED PROCEDURE", and "EXTENDED PROCEDURE" modes, an acquisition command of image data from the camera 3012, and a print command from the camera 3012 can be used. In "EXTENDED PROCEDURE", only NCDP start and end commands , and a shift command to each of "BASIC PROCEDURE"; "RECOMMENDED PROCEDURE", and "EXTENDED PROCEDURE" modes are allowed to be used in Fig. 8. However, as described above, other commands may be used in accordance with the specifications of respective manufacturers.

The image print processes based on the above "BASIC PROCEDURE" and "EXTENDED PROCEDURE" will be explained below.

Fig. 9 is a chart for explaining the NCDP communication procedures when an image print process is executed based on "BASIC PROCEDURE". This "BASIC PROCEDURE" is a simple print mode in which one image file is transferred from the DSC 3012 to the PD printer 1000 and is printed. Compatible image formats include an RGB image of the VGA size (640 × 480 pixels) and a JPEG image of the VGA size (640 × 480 pixels). The DSC 3012 transmits an image file in an image format supported by the PD printer 1000. In this case, no error handling is executed.

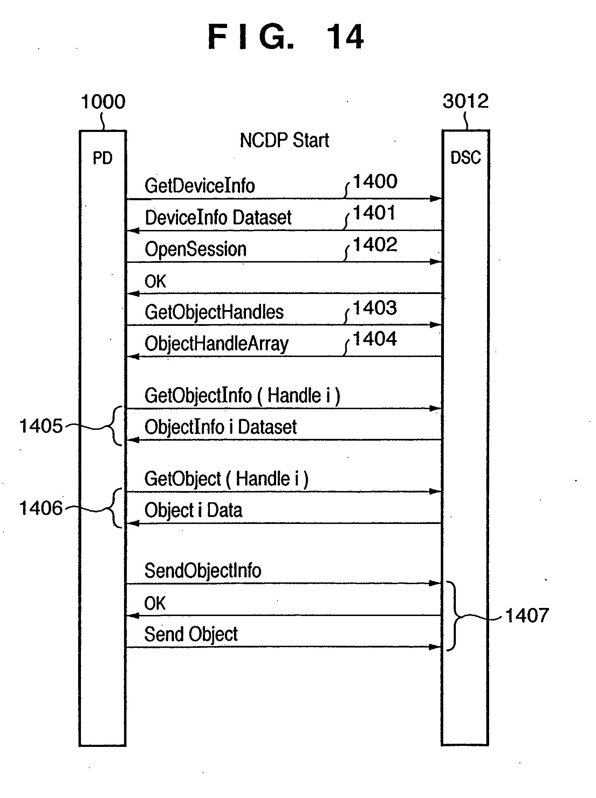

The PD printer 1000 sends a command (NCDPStart) indicating transition to NCDP to the DSC 3012 (900). If the DSC 3012 installs NCDP, it replies "OK" (901). Note that a practical example of this NCDP confirmation procedure using PTP will be explained in detail later with reference to Fig. 14.

If the PD printer 1000 and DSC 3012 confirm each other that the NCDP is installed, the PD printer 1000 transmits a mode start command (ProcedureStart) to the DSC 3012 (902). In response to this command, when the DSC 3012 transmits "BASIC PROCEDURE" as a simple print mode (903); the control shifts to a print mode based on "BASIC PROCEDURE". In this case, when an image to be printed is selected and its print instruction is issued upon operation on the DSC 3012, a command (JobStart) indicating the start of a print job is sent from the DSC 3012 to the PD printer 1000 (904). In response to this command, the PD printer 1000 is set in the simple print mode, and sends a command (GetImage) to the DSC 3012 to request it to send a JPEG image (905). Then, the DSC 3012 sends a JPEG image to the PD printer 1000 (906), and a print process in the PD printer 1000 starts. Upon completion of the print process of the designated image, the PD printer 1000 sends a command (JobEnd) indicating the end of the print job to the DSC 3012 (907). When the DSC 3012 returns an affirmative response (OK) in response to this command (908), the print process based on this "BASIC PROCEDURE" ends.

Since mode designation from the camera allows the device at which a print operation is to be made to designate a mode, the user who operates the camera can easily designate a mode he or she wants.

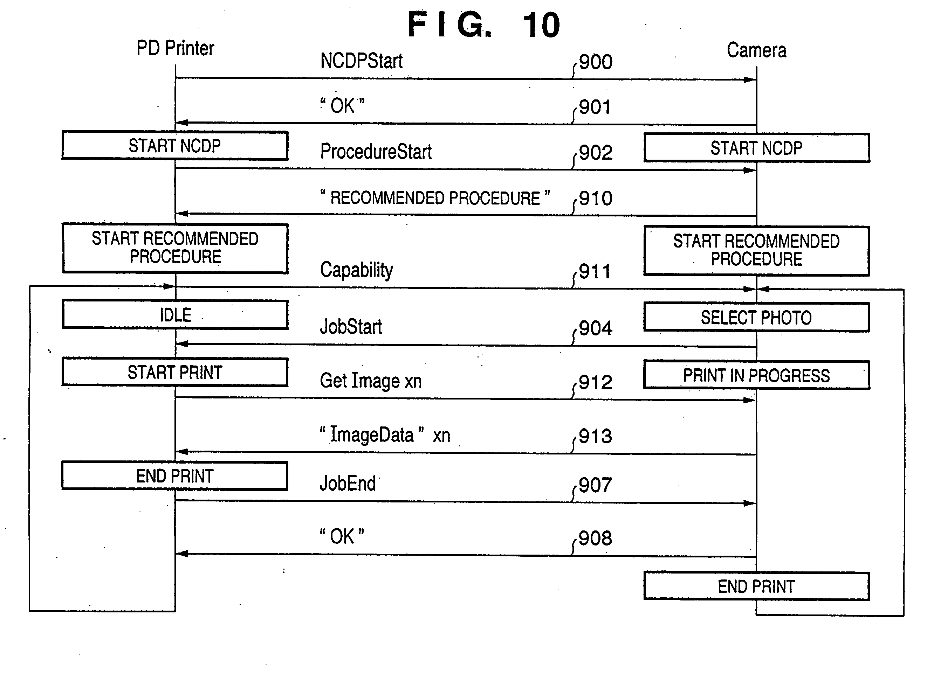

Fig. 10 is a chart for explaining the NCDP communication procedures when an image print process is executed based on "RECOMMENDED PROCEDURE". The same reference numerals in Fig. 10 denote procedures common to those in Fig. 9, and a description thereof will be omitted. In this "RECOMMENDED PROCEDURE", a "more diversified print" mode premised on negotiation between the PD printer 1000 and DSC 3012 can be set, and photo print and layout print processes of a plurality of images can be made. Also, error handling can be executed.

In Fig. 10, after the PD printer 1000 and DSC 3012 confirm each other as in Fig. 9 that the NCDP is installed, the DSC 3012 designates "RECOMMENDED PROCEDURE" (910) in this case. After that, procedures based on this "RECOMMENDED PROCEDURE" are executed. The PD printer 1000 generates Capability information (including its functions and the like), and transmits it to the DSC 3012 (911). This Capability information is transmitted to the DSC 3012 in a script format (a file that describes a series of procedures and information in a text format).

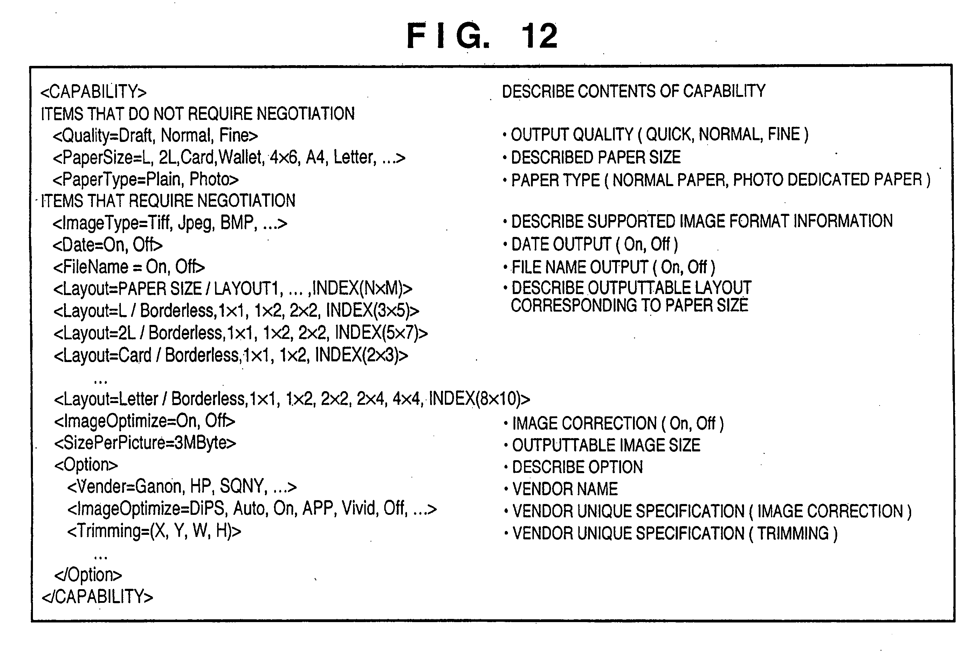

Fig. 12 shows an example of this Capability information.

As shown in Fig. 12, this Capability information contains information of the printable paper types and sizes, print quality, image data format, ON/OFF of date print, ON/OFF of file name print, layout, and ON/OFF of image correction, and also information of ON/OFF of functions corresponding to the specification of each camera manufacturer and the like as options.

"PaperSize" as one item of Capability information describes the sizes of paper sheets that can be set on the PD printer. When the PD printer has a function of automatically detecting the size of paper sheets set on it, "PaperSize" can describe "Auto". In this case, Capability information describes <PaperSize=Auto>. "PaperType" as another item of Capability information describes the types of paper sheets which can be set on the PD printer. When the PD printer has a function of automatically detecting the type of paper sheets set on it, "PaperType" can describe "Auto". In this case, Capability information describes <PaperType=Auto>.

Since the Capability information adopts script notation, and this notation complies with XML, that information can be easily exported to the architecture of another communication protocol, and exchange of such function information can be easily standardized. The reason for this can be easily understood in comparison to, e.g., a case wherein individual elements are described using dedicated commands. For example, if the DSC 3012 is notified of a description "<ImageType=...>" used to notify the image types that the PD printer 1000 can process in Fig. 12, a dedicated command is required. It is impossible from the start to prepare commands in consideration of new functions which may be added in the future. Since functions are described using a script, a series of pieces of information can be described as text of a plurality of lines. If the script contains an element that cannot be interpreted, such element can be ignored. Hence, expansibility will never be denied. The same applies to other scripts.

Upon reception of such Capability information, the DSC 3012 can make the user select an image to be print and the print conditions (type, size, border, date, and the like) of that image. When the DSC 3012 makes the user select the print conditions, it displays a user interface (to be referred to as a "print condition setup menu" hereinafter) used to set the print conditions on the display 35.

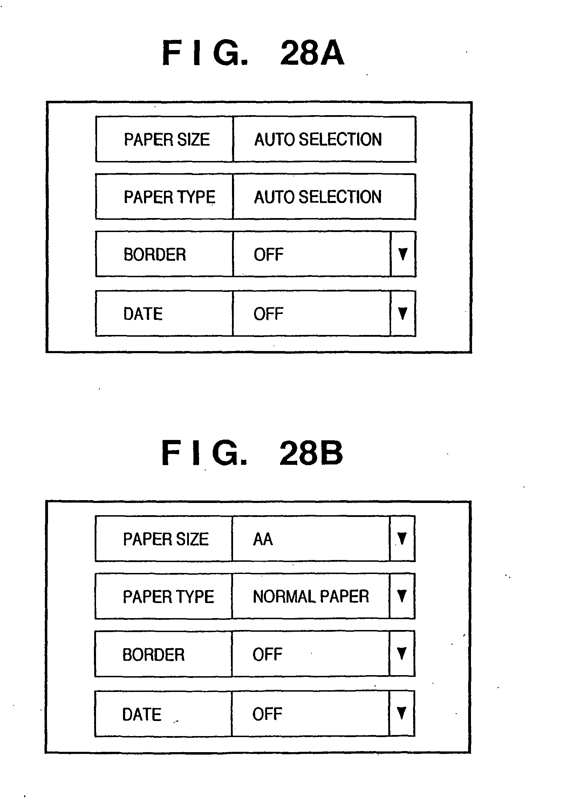

Figs. 28A and 28B show examples of the print condition setup menu displayed on the display 35. Fig. 28 shows an example of the print condition setup menu displayed on the display 35 when a PD printer directly connected to the DSC 3012 has a function of automatically detecting the size and type of paper sheets (i.e., the PD printer 1000). Fig. 28B shows an example of the print condition setup menu displayed on the display 35 when a PD printer directly connected to the DSC 3012 has no function of automatically detecting the size and type of paper sheets.

Referring to Figs. 28A and 28B, "paper size" is a field that makes the user select a paper size (L size, 2L size, card size, A4 size, postcard size, letter size, and the like). When the PD printer directly connected to the DSC 3012 has a function of automatically detecting the paper size, "auto selection" is displayed in "paper size", and the need for selection of the paper size is obviated. "Paper type" is a field that makes the user select the paper type (normal paper, photo dedicated paper, and the like). When the PD printer directly connected to the DSC 3012 has a function of automatically detecting the paper type, "auto selection" is displayed in "paper type", the need for selection of the paper type is obviated. "Border" is a field that makes the user select whether or not predetermined margin regions (non-print regions) are formed on the four sides of a paper sheet. "Date" is a field that makes the user select whether or a photographing data is to be additionally printed at a predetermined position (e.g., the lower right position). Note that the DSC 3012 of the first embodiment displays these fields in a combo box format (a list of selectable candidates is displayed to make the user select one of these candidates).

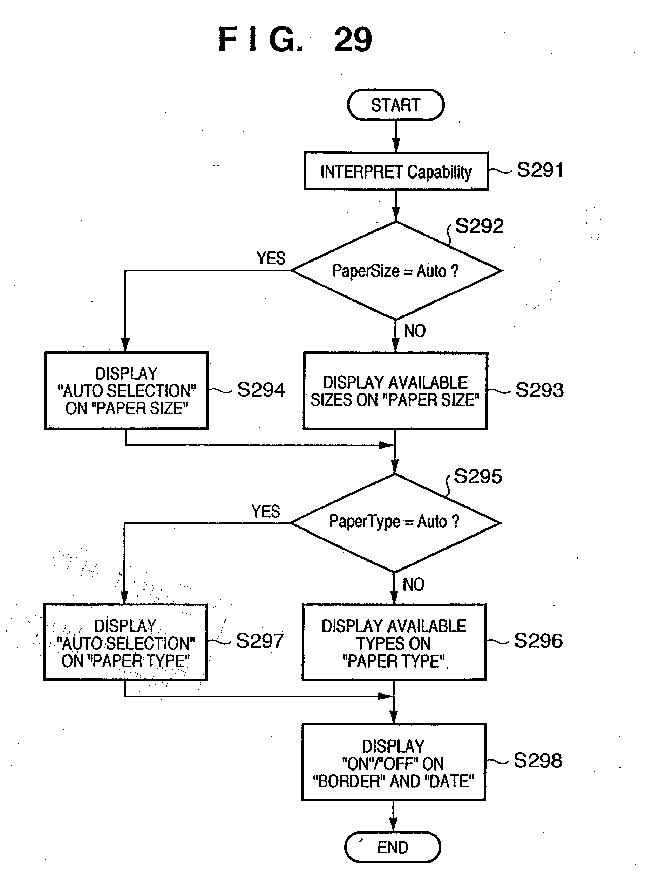

Fig. 29 is a flow chart for explaining an example of the sequence for displaying the print condition setup menu on the display 35.

In step S291, the CPU 31 interprets the Capability information of a PD printer (to be referred to as a "connected printer" hereinafter) directly connected to the DSC 3012.

The CPU 31 determines in step S292 whether or not "PaperSize" as one item of the Capability information is "Auto". In other words, the CPU 31 determines whether or not the connected printer has a function of automatically detecting the paper size. If "PaperSize" is "Auto", the flow advances to step S294; otherwise, the flow advances to step S293.

In step S293, the CPU 31 displays the sizes described in "PaperSize" on the field "paper size" so that the user can select one of them. In this case, the user must select the same size as that of paper sheets set on the connected printer. This is because if the user selects a size different from that of paper sheets set on the connected printer, a print image optimal to the paper size may not be obtained.

In step S294, the CPU 31 displays "auto selection" on the field "paper size" to obviate the need for selection of the paper sizes. In this case, the user can recognize that the connected printer has a function of automatically detecting the paper size. Also, the user need not select the same size as that of paper sheets set on the connected printer, thus allowing easy operations.

The CPU 31 determines in step S295 whether or not "PaperType" as another item of the Capability information is "Auto". In other words, the CPU 31 determines whether or not the connected printer has a function of automatically detecting the paper'type. If "PaperType" is "Auto", the flow advances to step S297; otherwise, the flow advances to step S296.

In step S296, the CPU 31 displays the types described in "PaperType" on the field "paper type" so that the user can select one of them. In this case, the user must select the same type as that of paper sheets set on the connected printer. This is because if the user selects a type different from that of paper sheets set on the connected printer, a print image optimal to the paper size may not be obtained.

In step S297, the CPU 31 displays "auto selection" on the field "paper type" to obviate the need for selection of the paper types. In this case, the user can recognize that the connected printer has a function of automatically detecting the paper type. Also, the user need not select the same type as that of paper sheets set on the connected printer, thus allowing easy operations.

In step S298, the CPU 31 displays "ON" and "OFF" on the fields "border" and "date" so that the user can select one of them.

After the image to be printed is selected and its print conditions (type, size, border, date, and the like) are set, when a print start instruction is issued, a print command (JobStart) is sent from the DSC 3012 to the PD printer 1000 (904). In response to this command, the PD printer 1000 issues a command (GetImage xn) which requests that image data (912). In response to this command, the DSC 3012 transmits corresponding image data in an image format (Tiff, JPEG, RGB, or the like) that the PD printer 1000 can receive (913). The reason why a plurality of image data can be transmitted for an image print process per paper sheet is that when, for example, a 2 x 2 layout print mode or the like is designated, four image data must be transmitted per paper sheet. Upon completion of the print process of the designated image, the PD printer 1000 transmits a command (JobEnd) indicating the end of the print job to the DSC 3012 (907). When the DSC 3012 returns an affirmative response (OK) in response to this command (908), the control starts the select and print processes of the next image based on this "RECOMMENDED PROCEDURE" again.

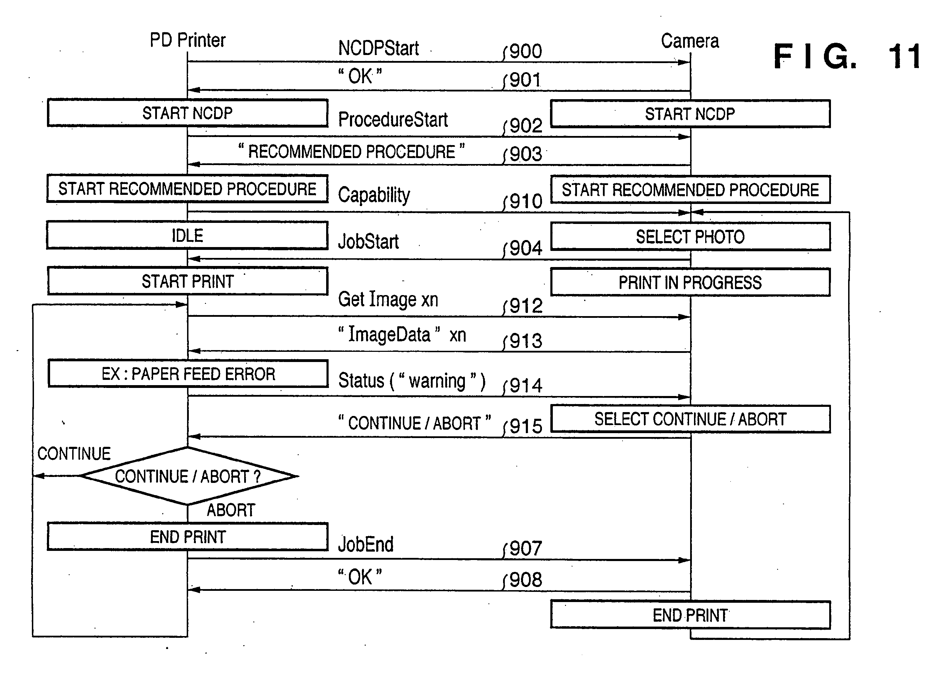

Fig. 11 is a chart for explaining the communication procedures when an error has occurred in the PD printer 1000 in the NCDP communication procedures upon executing an image print process based on the above "RECOMMENDED PROCEDURE". The same reference numerals in Fig. 11 denote procedures common to those in Fig. 10, and a description thereof will be omitted.

Fig. 11 exemplifies a case wherein a paper feed error has occurred in the PD printer 1000 during the print process based on "RECOMMENDED PROCEDURE". In this case, the PD printer 1000 sends status information (Status) indicating the paper feed error to the DSC 3012 (914). In response to this information, a command indicating if that print process is to be continued (JobContinue) or aborted (JobAbort) is transmitted to the PD printer 1000 on the basis of designation contents determined by the user of the DSC 3012 (915). When the print process is to be aborted, the PD printer 1000 aborts that print process, and transmits a print job end message (JobEnd). On the other hand, when continuation of the print process is designated, the apparatus continues the print process after that paper feed error is recovered.

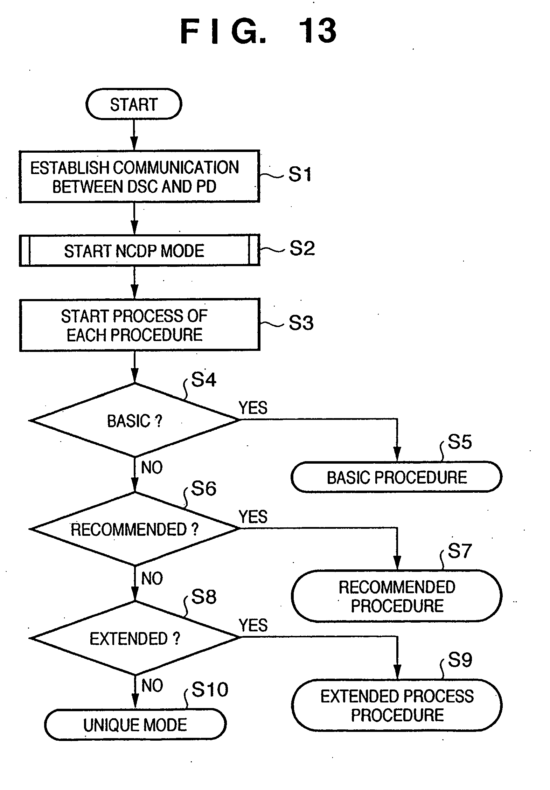

The aforementioned processing sequence will be explained below with reference to the flow chart of Fig. 13.

Fig. 13 is a flow chart for explaining the processing sequence shown in Fig. 7.

In step S1, a communication is established between the DSC 3012 and PD printer 1000 (700). It is checked in step S2 if these devices have already installed NCDP. If these devices have already installed NCDP, the NCDP mode starts. The flow then advances to step S3 to receive a procedure instruction from the DSC 3012, and to start the designated procedure. If "BASIC PROCEDURE" is designated, the flow advances from step S4 to step S5 to execute a print process based on "BASIC PROCEDURE". On the other hand, if "RECOMMENDED PROCEDURE" is designated, the flow advances from step S6 to step S7 to execute a print process based on "RECOMMENDED PROCEDURE". Furthermore, if "EXTENDED PROCEDURE" is designated, the flow advances from step S8 to step S9 to execute a print process based on "EXTENDED PROCEDURE" corresponding to each vendor. If another procedure is designated, the flow advances to step S10 to execute a print process in a mode unique to the PD printer 1000 and DSC 3012.

An example wherein various commands (Fig. 8) in the NCDP mode mentioned above are implemented using the standard protocol PTP specified by PIMA (Photographic and Imaging Manufacturers Association) for image transfer (wrapper using PTP) will be described. In the first embodiment, NCDP using PTP will be exemplified. However, the present invention is not limited to such specific example. For example, a direct print service API may be implemented on another interface or another class (Class).

### [NCDPStart]

Fig. 14 is a view for explaining an implementation example of a command (NCDPStart) that instructs to start the NCDP procedure using the standard image transfer protocol PTP. More specifically, Fig. 14 shows negotiation procedures of determining whether or not the DSC 3012 and PD printer 1000 can serve as the photo direct print system described in this embodiment, so as to dominate "shift to NCDP" in Fig. 7.

In procedure 1400, the PD printer 1000 transmits PTP command GetDeviceInfo to the DSC 3012 to request it to send information associated with objects held by the DSC. Simply stated, this command is an inquiry about what device is connected to the PD printer. In response to this command, the DSC 3012 transmits (informs) information about itself to the PD printer 1000 using DeviceInfo Dataset. However, this information is attribute information associated with a camera, which is specified by the PTP standard, but does not contain any information associated with direct print. In procedure 1402, PTP command OpenSession starts a session for assigning the DSC 3012 as a resource, assigning handles to data objects as needed, and making a special initialization process.

In procedure 1403, a handle request is sent to the DSC 3012. With this request, the PD printer 1000 requests numbers uniquely assigned to unknown objects (sensed images, scripts, and the like) held by the DSC 3012 so as to specify these objects. In response to this request, a handle list held by the DSC 3012 is sent back in procedure 1404 (this list is equivalent to a message indicating the number of objects).

As a result of the above procedures, the PD printer 1000 can determine the number of objects held by the DSC 3012. It is important in negotiation to determine whether or not both devices have functions capable of starting NCDP. In this determination, when scripts which respectively describe passwords "NCDP_CAMERA" and "NCDP_PRINTER" are cast, and both devices can receive intended results from each other, the control starts the NCDP direct print mode.

Therefore, as described above, the PD printer 1000 side must search objects held by the DSC 3012 for an object whose attribute is a script.

For this purpose, the PD printer 1000 outputs PTP command GetObjectInfo(Handle i) (in this case, i = 1) that inquires the attribute of an object with handle "1" to the DSC 3012, and receives the returned i-th attribute (ObjectInfo i Dataset). The printer apparatus repeats this process from 1 to the maximum number of objects. More specifically, the printer apparatus searches for an object whose attribute is not an image but a script that describes a password (word). PTP command GetObjectInfo can designate an object type as an option. However, since some digital cameras may not support this option, such script object search process is required.

When the PD printer 1000 side detects a handle (let handle "j") of the script object, it outputs PTP command "GetObject(Handle j)" which requests data indicated by that handle "j" to the DSC 3012. As a result, the DSC 3012 outputs a script which describes password "NCDP_CAMERA" to the PD printer 1000 as "Object j Data".

As a result, the PD printer 1000 can recognize that the connected DSC 3012 is an NCDP compatible digital camera. Next, the PD printer 1000 sends password "NCDP_PRINTER" indicating an NCDP compatible printer. Prior to this password, the PD printer 1000 transmits attribute information of an object to be transmitted using SendObjectInfo. Then, the PD printer 1000 notifies the DSC 3012 of password "NCDP_PRINTER" using SendObject. Note that these passwords are merely examples, and the present invention is not limited to these specific ones.

As a result of the above procedures, both devices recognize that they are NCDP compatible devices. After that, the control enters the NCDP photo direct print mode according to the first embodiment.

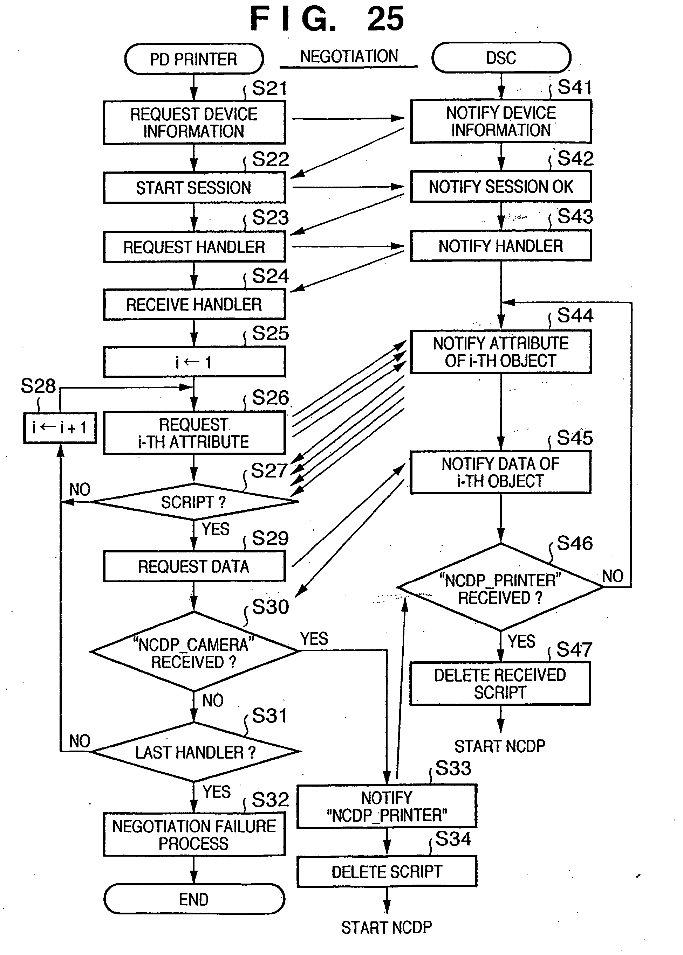

Fig. 25 is a flow chart showing the aforementioned procedures.

The PD printer 1000 outputs a device information request (GetDeviceInfo) to the DSC 3012 in step S21 (the DSC 3012 notifies the PD printer 1000 of information indicating the self device attribute in step S41 in response to this request (DeviceInfoDataset)).

The PD printer 1000 declares the start of a session (OpenSession) in step S22. The DSC 3012 receives this declaration, and notifies the PD printer 1000 of OK in step S42.

The PD printer 1000 requests handles of objects held by the DSC 3012 (GetObjectHandles) in step S23. In response to this request, the DSC 3012 notifies the PD printer 1000 of objects (images and scripts) held by itself (ObjectHandleArray) in step S43, and the PD printer 1000 receives that information (step S24).

Since the PD printer 1000 can detect the number of handles from the received information, it substitutes "1" in variable i indicating a handle as an initial value in step S25, and requests an attribute of the i-th object (GetObject(Handle i)) in step S26. As a result, since the DSC 3012 transmits the attribute of the corresponding object (ObjectInfo i Dataset), the PD printer 1000 receives it, and checks if that object is a script (step S27). If it is determined that the corresponding object is other than a script (sensed image), the PD printer 1000 increments variable i by 1 in step S28, and repeats the process in step S26.

If it is determined that the i-th object is a script, the flow advances to step S27 to request the DSC to transfer the contents of the i-th object. (GetObject(Handle i)). That is, this request is sent in anticipation of a password (word). As a result, since the DSC 3012 notifies the PD printer 1000 of the contents of the designated object (Object i Data) in step S45, the PD printer 1000 checks if the contents are password "NCDP_CAMERA" (step S29). If it is determined that the contents are not password "NCDP_CAMERA", but another script is sent back inadvertently, the PD printer 1000 checks in step S31 if variable i indicates the last handler. If NO in step S31, the flow returns to step S28 to repeat the above processes. If the PD printer 1000 determines that the DSC does not notify password "NCDP_CAMERA" after the last hander has been reached, it determines that the connected DSC 3012 is an NCDP incompatible digital camera. In order to abort subsequent processes, the PD printer 1000 turns on an LED equipped on its console to notify an error, or displays a message indicating a negotiation failure, thus ending this process.

On the other hand, if the PD printer 1000 receives password "NCDP_CAMERA" from the DSC, the flow advances to step S33. In step S33, the PD printer 1000 sends a script that describes password "NCDP_PRINTER" to the DSC 3012 (SendObject) via a procedure

### (transmission of SendObjectInfo and reception of OK)

indicating that the PD printer 1000 is compatible to NCDP. Since the script received from the DSC 3012 is no longer required, the PD printer 1000 deletes that script, and starts the NCDP mode.

If it is determined that password "NCDP_PRINTER" is received (step S46), the flow advances to step S47, and the DSC 3012 deletes the script received from the PD printer 1000 and starts the NCDP mode.

The processing sequence of negotiation has been described. Note that the above example corresponds to the case wherein both the PD printer 1000 and DSC 3012 support NCDP.

Since negotiation in the first embodiment uses PTP, even a digital camera having an NCDP incompatible USB connection function executes the processes from step S41 to steps S44, S45, and S46. However, since the process in step S45 is not present, it is determined that received data is insignificant data (script), and that data is simply received and stored to repeat steps S44 and S45.

It is particularly noted that the transmission source of the password is necessarily the DSC 3012 side (even when the DSC 3012 is incompatible to NCDP, it transmits the first script) in the first embodiment. That is, the PD printer 1000 side issues password "NCDP_PRINTER" in response to password "NCDP_CAMERA", and only when the PD printer 1000 receives first password "NCDP_CAMERA", it issues password "NCDP_PRINTER" in response to that password.

Upon adopting such procedures, if the PD printer 1000 issues the password first, no problem is posed when the DSC 3012 is compatible to NCDP. However, if the DSC 3012 is incompatible to NCDP, since the flow cannot advance to the process in step S47, it endlessly receives and stores insignificant script files (junk files).

As described above, since the DSC 3012 side outputs first authentication information (the above password or word) upon mutual authentication, and the PD printer 1000 outputs authentication information in response to that information, a device connected to the PD printer 1000 can be prevented from accumulating junk files irrespective of its type. This is because the PD printer 1000 does not send back any authentication information if a script received from the DSC 3012 does not contain any expected authentication information.

With the above process, since an NCDP compatible digital camera holds a script that describes a password, transition to the NCDP print system is guaranteed. However, as can be easily seen from the above description, in order to shorten the negotiation time, a script that contains authentication information (word) is preferably assigned to an object with a handle number, which is requested earlier, of those of the DSC 3012 side. That is, if the DSC 3012 is compatible to NCDP, and receives a handle request (GetObjectHandles), it assigns handle number "1" to a script (authentication information) including the word, assigns subsequent handle numbers to images which have been sensed, stored, and held, and notifies the PD printer 1000 of that assignment result.

As a result, the loop processes of steps S26 to S28 or those of steps S26 to S31 and S28 can be substantially omitted, and the flow can advance to steps S33 and S34 at once, thus achieving high-speed negotiation.

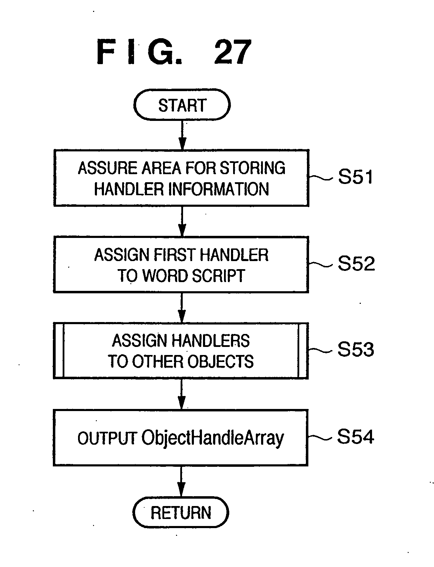

As the process on the DSC 3012 side, for example, a sequence shown in Fig. 27 can be adopted (a program of this sequence is stored in the ROM 32 in the DSC 3012). Note that the process in Fig. 27 is executed when a handle request command (GetObjectHandles) is received from the PD printer 1000, and is called from a host process upon reception of that command. Hence, note that whether or not GetObjectHandles is received has already been determined by the host process.

In step S51, a table (or a variable area) used to store objects and handles in correspondence with each other is assured in the RAM 33. The flow advances to step S52, and an object that describes a script indicating NCDP compatibility is set in the table to assign it to the first handle. After that, handlers are assigned to remaining objects (normally, sensed image data that have been stored and held) and are set in the table. The result is then sent to the PD printer 1000 as ObjectHandleArray.

As a result, the DSC 3012 and PD printer 1000 can share (commonize) information upon designating objects. In the subsequent processes, objects in the DSC 3012 are exchanged using handle numbers.

When the PD printer 1000 determines whether or not an object of the DSC 3012 is a script in an order tracing back from the last handle, the DSC 3012 can assign a script including a password to the last handle upon notifying the PD printer 1000 of handles.

Note that it is most effective to assign the first handle number to an object that describes a script indicating NCDP compatibility. However, the first handle number need not always be assigned, and it is sufficiently effective if a number near the first number is assigned. That is, as long as the last number is not assigned to an object that describes a script indicating NCDP compatibility, higher-speed negotiation can be attained compared to the case wherein the last number is assigned.

### [ProcedureStart]

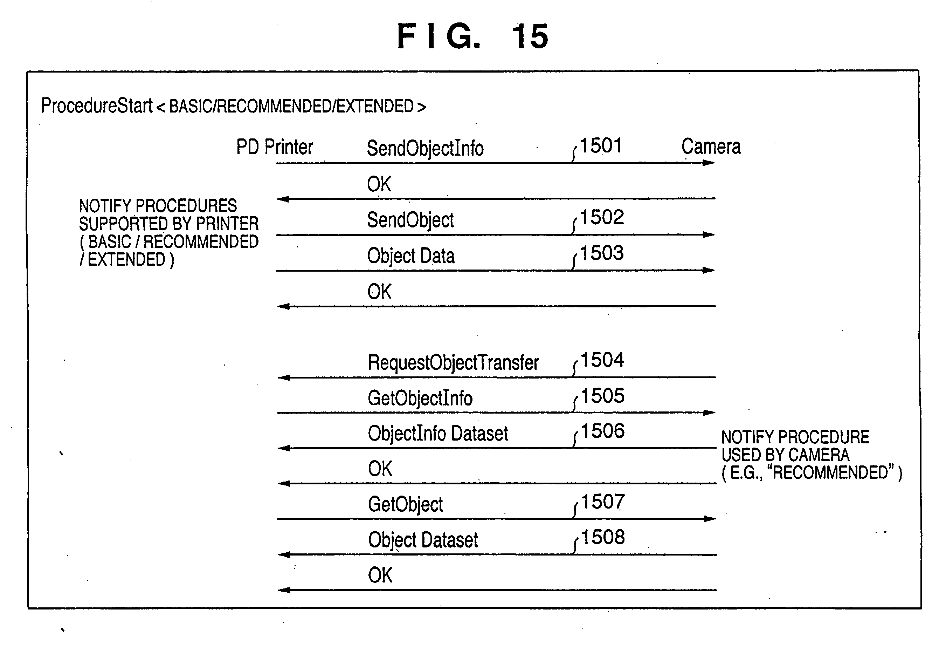

Fig. 15 is a view for explaining an example wherein a command (ProcedureStart) used to start a given mode upon reception of a command that designates a start procedure to that mode from the DSC 3012 is implemented using the PTP architecture.

In order to notify the DSC 3012 of procedures. "BASIC PROCEDURE", "RECOMMENDED PROCEDURE", and "EXTENDED PROCEDURE" supported by the PD printer 1000, the printer apparatus notifies the DSC 3012 of the presence of object information to be sent to it using PTP command SendObjectInfo (1501). Upon reception of an affirmative response (OK) from the DSC 3012 in response to this command, the printer apparatus sends a message indicating that it is ready to transmit an object to the DSC 3012 using PTP command SendObject (1502), and then transmits information associated with the procedures supported by the PD printer 1000 using ObjectData (1503). The DSC 3012 issues event message RequestDataTransfer defined by PTP to the PD printer 1000 (1504) to notify the printer apparatus that a PTP command GetObject operation is to be launched. In response to this message, when the PD printer 1000 sends a message indicating that it is ready to receive information associated with object information (GetObjectInfo) (1505), that information is returned using ObjectInfo Dataset (1506). When object information itself is requested by designating that object information (1507), the DSC 3012 informs the PD printer 1000 of procedures ("basic", "recommended", "extended", and the like) that the DSC 3012 uses by Object Dataset (1508).

In this manner, the DSC 3012 can designate an image print mode of the PD printer 1000.

### [NCDPEnd]

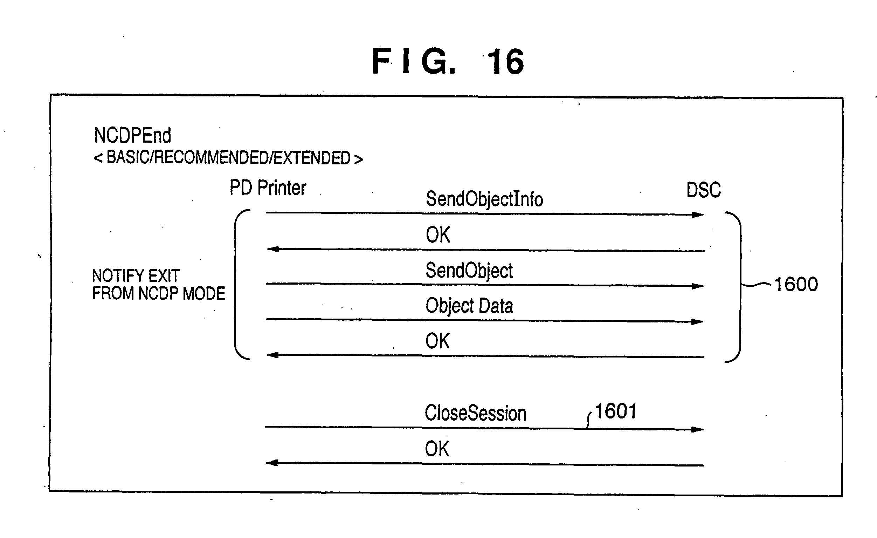

Fig. 16 is a view for explaining an example wherein a command (NCDPEnd) used to end the NCDP communication control procedures in the first embodiment is implemented using the PTP architecture.

In this procedure, the PD printer 1000 informs the DSC 3012 of the presence of object information to be sent to it (1600), and notifies the DSC 3012 that it leaves the NCDP mode using ObjectData. Upon reception of an affirmative response (OK) in response to this command, PTP command CloseSession is transmitted (1601) to end this communication. In this way, the NCDP communication procedures end.

### [Capability]

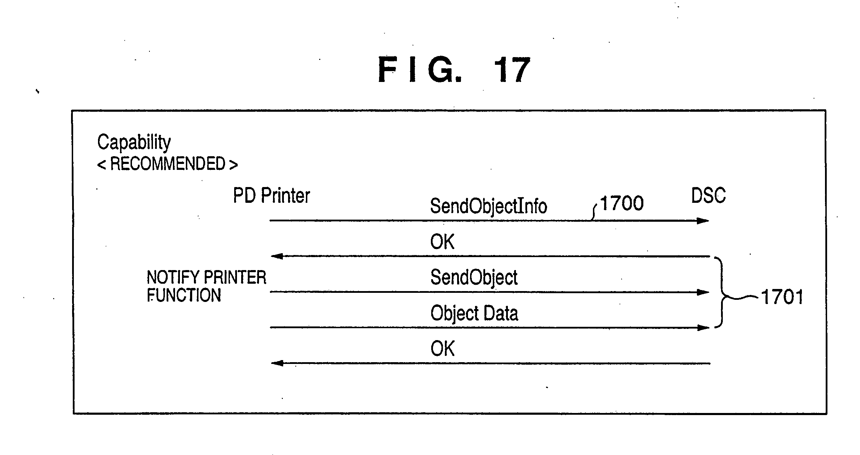

Fig. 17 is a view for explaining an example wherein communication procedures in a Capability command used to notify the DSC 3012 of the functions of the PD printer 1000 in NCDP of the first embodiment are implemented using the PTP protocol.

In this procedure, the PD printer 1000 informs the DSC 3012 of the presence of object information to be sent to it using PTP command SendObjectInfo (1700). Then, the printer apparatus notifies the DSC 3012 that it is ready to transmit object information using PTP command SendObject, and then transmits the functions of the PD printer 1000 to the DSC 3012 in a script format (Fig. 12) using Object Data (1701).

### [GetImage]

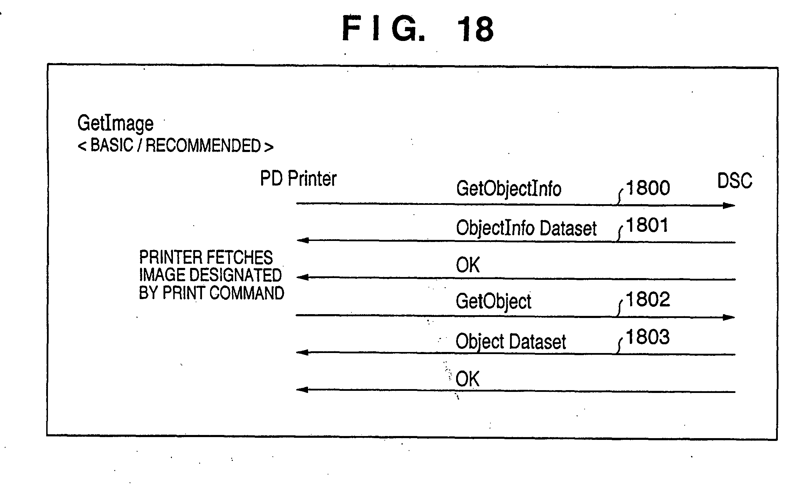

Fig. 18 is a view for explaining an example wherein communication procedures when the PD printer 1000 acquires image data (JPEG image) held by the DSC 3012 (GetImage) in NCDP of the first embodiment are implemented using the PTP protocol.

Upon sending a request of information associated with an object held by the DSC 3012 (1800), the DSC 3012 sends information (Object Dataset) associated with that object to the PD printer 1000 (1801). When an acquisition request (GetObject) is issued by designating that object (1802), the DSC 3012 transmits the requested image file (Object Dataset) to the PD printer 1000 (1803). In this way, the PD printer 1000 can acquire a desired image file from the DSC 3012. [StatusSend]

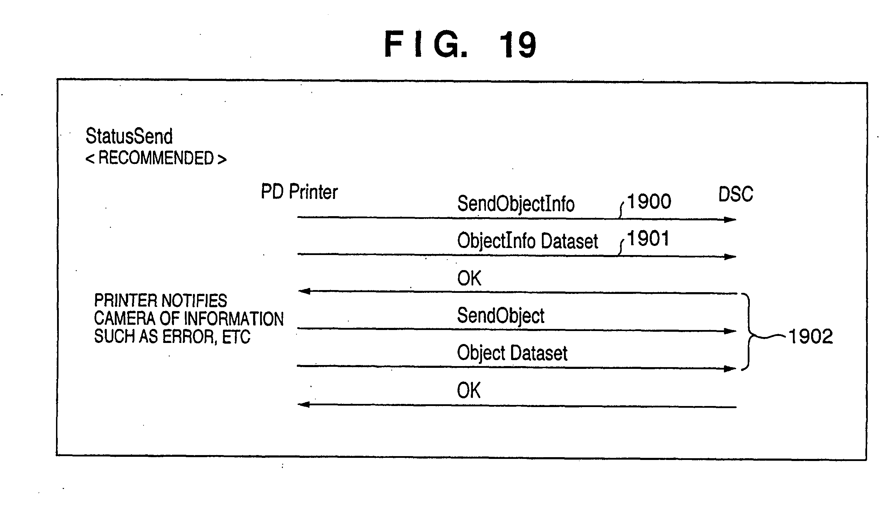

Fig. 19 is a view for explaining an example wherein communication procedures when the PD printer 1000 notifies the DSC 3012 of error status or the like (StatusSend) in NCDP of the first embodiment are implemented using the PTP protocol.

The PD printer 1000 notifies the DSC 3012 of the presence of object information to be sent to it using PTP command SendObjectInfo (1900). Then, the PD printer 1000 transmits an information set (Object Dataset) associated with that object information to the DSC 3012 (1901). In response to an affirmative response (OK) from the DSC 3012, status information of errors or the like in the PD printer 1000 is transmitted using PTP commands SendObject and Object Dataset.

### [PageEnd]

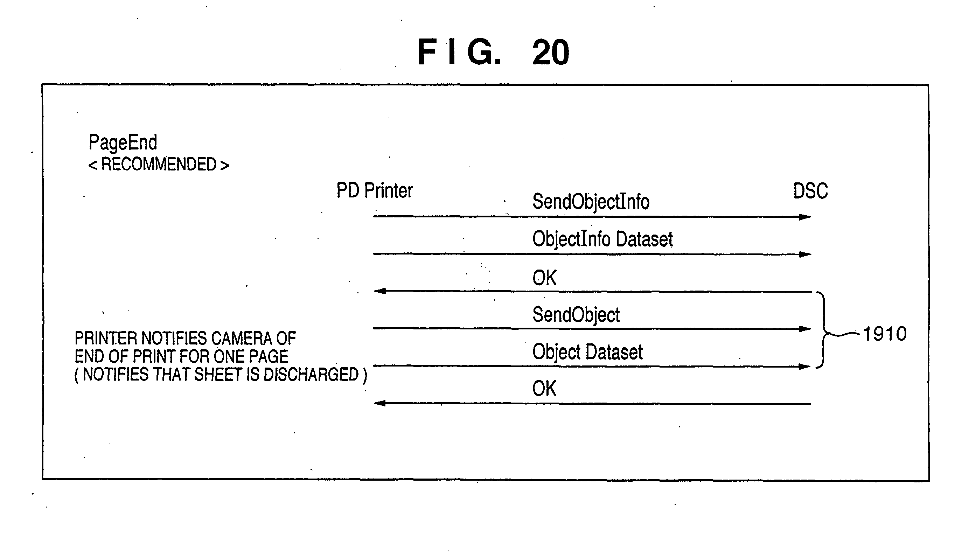

Fig. 20 is a view for explaining an example wherein communication procedures when the PD printer 1000 notifies the DSC 3012 of the end of a print process for one page (PageEnd) in NCDP of the first embodiment are implemented using the PTP protocol.

### [JobEnd]

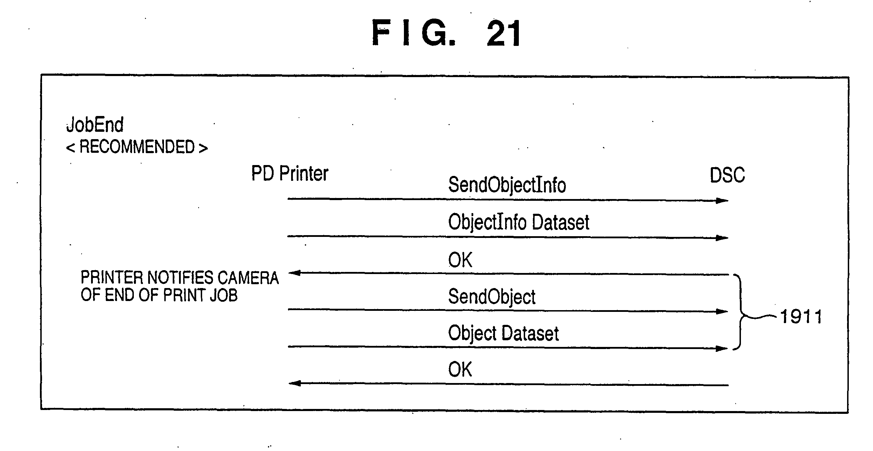

Fig. 21 is a view for explaining an example wherein communication procedures when the PD printer 1000 notifies the DSC 3012 of the end of a print job (JobEnd) in NCDP of the first embodiment are implemented using the PTP protocol. In Figs. 20 and 21, after execution of procedures 1900 and 1901 in Fig. 19, the PD printer 1000 notifies the DSC 3012 of the end of the print process for one page (1910 in Fig. 20), and the PD printer 1000 notifies the DSC 3012 of the end of the print job (1911 in Fig. 21).

### [JobStart]

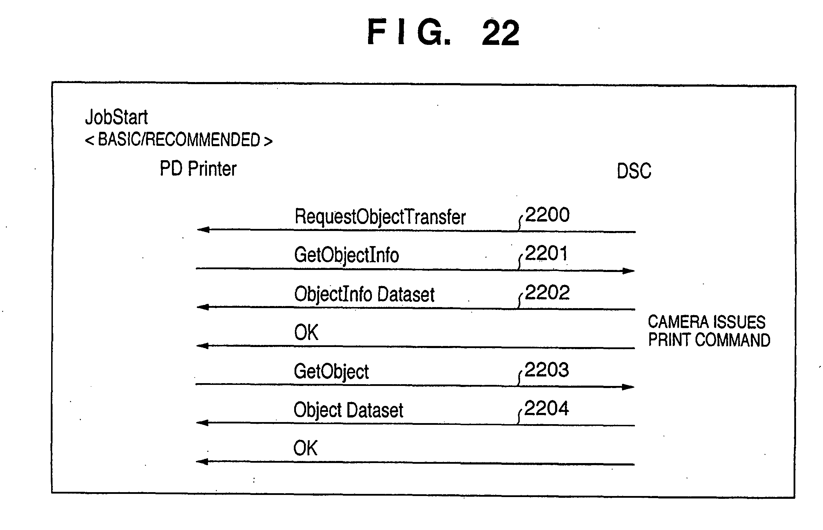

Fig. 22 is a view for explaining an example wherein communication procedures when the DSC 3012 notifies the PD printer 1000 of the start of a print job (JobStart) in NCDP of the first embodiment are implemented using the PTP protocol.

The DSC 3012 sends event message RequestObjectTransfer defined by PTP to the PD printer 1000 (2200) so as to urge the PD printer 1000 to issue PTP command GetObject. As a result, when the PD printer 1000 issues PTP command GetObjectInfo (2201), the DSC 3012 transmits information associated with object information to be transmitted. In response to this information, when the PD printer 1000 requests object information (GetObject: 2203), Object Dataset is transmitted to issue a print command from the DSC 3012 to the PD printer 1000 (2204).

### [JobAbort]

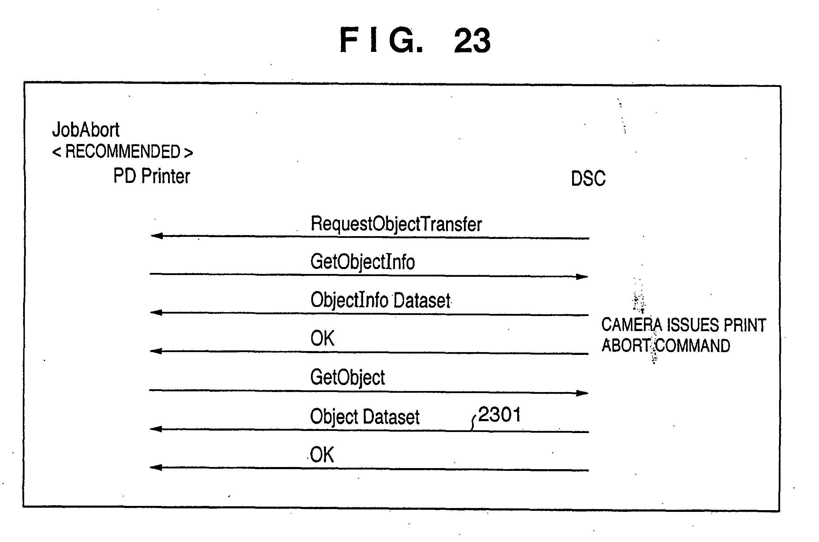

Fig. 23 is a view for explaining an example wherein communication procedures when the DSC 3012 issues a print abort command to the PD printer 1000 (JobAbort) in NCDP of the first embodiment are implemented using the PTP protocol.

### [JobContinue]

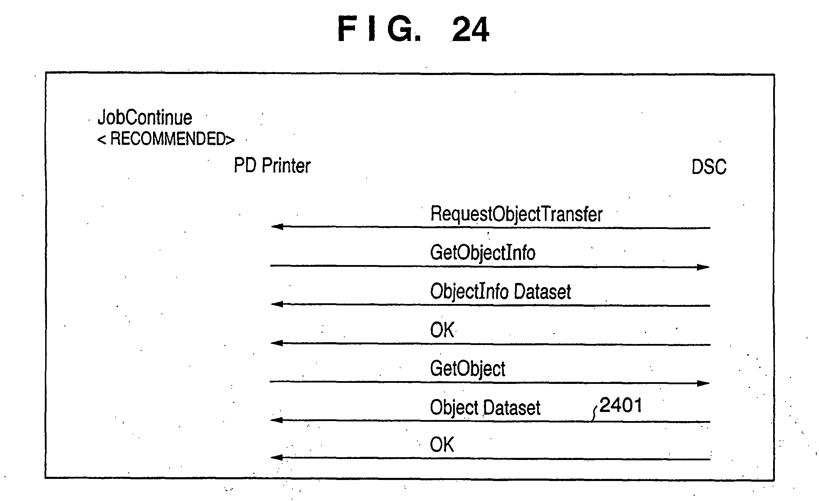

Fig. 24 is a view for explaining an example wherein communication procedures when the DSC 3012 issues a print restart command to the PD printer 1000 (JobContinue) in NCDP of the first embodiment are implemented using the PTP protocol.

In Figs. 23 and 24, after procedures 2200 to 2203 in Fig. 22 are executed, the DSC 3012 issues a print abort command to the PD printer 1000 (2301 in Fig. 23), and sends a print restart command to the PD printer 1000 (2401 in Fig. 24).

Note that the DSC 3012 of the first embodiment can display "auto selection" (information indicating that the need for user's selection is obviated) on its user interface depending on whether or not "PaperSize" describes "upToPrinter" (information indicating that allows selection at the PD printer 1000). Also, the DSC 3012 of the first embodiment can display "auto selection" (information indicating that the need for user's selection is obviated) on its user interface depending on whether or not "PaperType" describes "upToPrinter" (information indicating that allows selection at the PD printer 1000).

The first embodiment can be practiced using an image input apparatus having the same functions as those of the DSC 3012 in place of the DSC 3012. Also, the first embodiment can be practiced using an image output apparatus having the same functions as those of the PD printer 1000 in place of the PD printer 1000.

In the first embodiment, upon forming the photo direct print system, the PD printer 1000 serves as a USB host and the DSC 3012 serves as a USB device. As described above, as a result of examination of the circumstances that most of recent digital cameras have a USB device function to communicate with a PC, the number of digital camera manufacturers is larger than that of printer manufacturers, and a host device need not trouble about a power supply, when the printer side serves as a host, the load on the manufacturers can be reduced, the manufacturers can sufficiently enjoy merits upon building a system as the object of the present invention, and such system is preferable for end users.

In the first embodiment, as direct communication means between the digital camera 3012 and PD printer 1000, direct connection using the USB cable has been exemplified. However, since a direct communication can also be made by a wireless communication such as Bluetooth, IEEE802.11, or the like, the present invention is not limited to the above example.

### (Another Embodiment)

The present invention may be applied to either a system constituted by a plurality of devices (e.g., a host computer, interface device, reader, printer, and the like), or an apparatus consisting of a single equipment (e.g., a copying machine, facsimile apparatus, or the like).

The objects of the present invention are also achieved by supplying a storage medium (or recording medium), which records a program code of software that can implement the functions (processes to be executed on the camera side, various print processes executed on the printer side) of the above-mentioned embodiments to the system or apparatus, and reading out and executing the program code stored in the storage medium by a computer (or a CPU or MPU) of the system or apparatus. In this case, the program code itself read out from the storage medium implements the functions of the above-mentioned embodiments, and the storage medium which stores the program code constitutes the present invention. The functions of the above-mentioned embodiments may be implemented not only by executing the readout program code by the computer but also by some or all of actual processing operations executed by an operating system (OS) running on the computer on the basis of an instruction of the program code.

Furthermore, the functions of the above-mentioned embodiments may be implemented by some or all of actual processing operations executed by a CPU or the like arranged in a function extension card or a function extension unit, which is inserted in or connected to the computer, after the program code read out from the storage medium is written in a memory of the extension card or unit.

As many apparently widely different embodiments of the present invention can be made without departing from the scope thereof, it is to be understood that the invention is not limited to the specific embodiments thereof except as defined in the claims.

## Claims

1. A digital camera (3012) capable of directly communicating with a printer (1000), comprising:
reception means (41) for receiving from the printer capability information representative of capabilities of the printer,
the digital camera **characterized by** further comprising:
determining means (31) for determining, according to the capability information, whether or not the printer has a function of automatically detecting at least one of a paper size and a paper type; and
control means for controlling a user interface (35) in form of a display for notifying a user that the printer has the function of automatically detecting the at least one of a paper size and a paper type, if it is determined by the determining means that the printer has the function of automatically detecting the at least one of a paper size and a paper type,
wherein if it is determined by the determining means that the printer has the function of automatically detecting a paper size, the control means is operable to display on the user interface a message so as to obviate the need for the user to select a paper size.

2. A digital camera according to claim 1, wherein if it is determined by the determining means that the printer has the function of automatically detecting a paper type, the control means is operable to display on the user interface a message so as to obviate the need for the user to select a paper type.

3. A digital camera according to claim 1 or 2, wherein the reception means comprises wireless communication means for receiving the capability information from the printer by wireless communication.

4. A system comprising a printer directly communicating with a digital camera according to any one of claims 1 to 3, the printer comprising:
paper size detection means (3032) for automatically detecting a paper size; and
transmission means (4004) for transmitting capability information to the digital camera, the capability information indicating that the printer has a function of automatically detecting a paper size.

5. A system comprising a printer directly communicating with a digital camera according to any one of claims 1 to 3, the printer comprising:
paper type detection means (3031) for automatically detecting a paper type; and
transmission means (4004) for transmitting capability information to the digital camera, the capability information indicating that the printer has a function of automatically detecting a paper type.

6. A system comprising printer directly communicating with a digital camera according to any one of claims 1 to 3, the printer comprising:
paper size detection means (3032) for automatically detecting a paper size;
paper type detection means (3031) for automatically detecting a paper type; and
transmission means (4004) for transmitting capability information to the digital camera, the capability information indicating that the printer has a function of automatically detecting a paper size and a paper type.

7. A system according to any one of claims 4 to 6, wherein the transmission means comprises wireless communication means for transmitting the capability information to the digital camera according to any one of claims 1 to 3 by wireless communication.

8. A method of operating a digital camera (3012) capable of directly communicating with a printer (1000), comprising:
a receiving step of receiving from the printer capability information representative of capabilities of the printer,
the method **characterized by** further comprising:
a determination step of determining, according to the capability information, whether or not the printer has a function of automatically detecting at least one of a paper size and a paper type; and
a controlling step of controlling a user interface (35) in form of a display for notifying a user that the printer has the function of automatically detecting the at least one of a paper size and a paper type, if it is determined that the printer has the function of automatically detecting the at least one of a paper size and a paper type,
wherein if it is determined that the printer has the function of automatically detecting a paper size, the controlling step controls the user interface to display a message on the user interface so as to obviate the need for the user to select a paper size.

9. A method according to claim 8, wherein if it is determined that the printer has the function of automatically detecting a paper type, the controlling step controls the user interface to display a message on the user interface so as to obviate the need for the user to select a paper type.

10. A method according to claim 8 or 9, wherein the digital camera receives the capability information from the printer by wireless communication.

11. A storage medium storing processor implementable instruction for controlling a camera when executed to carry out all of the steps of a method as claimed in any one of claims 8 to 10.

## Patentansprüche

1. Digitalkamera (3012), die in der Lage ist, direkt mit einem Drucker (1000) zu kommunizieren, umfassend:
eine Empfangseinrichtung (41) zum Empfangen von Leistungsfähigkeitsinformation, die repräsentativ ist für Leistungen des Druckers, vom Drucker,
wobei die Digitalkamera weiterhin **gekennzeichnet ist durch**:
eine Bestimmungseinrichtung (31), um entsprechend der Leistungsfähigkeitsinformation zu bestimmen, ob der Drucker eine Funktion des automatischen Nachweisens einer Papiergröße und/oder eines Papiertyps aufweist oder nicht; und
eine Steuereinrichtung zum Steuern einer Benutzerschnittstelle (35) in Form einer Anzeige, um einem Benutzer mitzuteilen, dass der Drucker die Funktion des automatischen Nachweisens einer Papiergröße und/oder eines Papiertyps aufweist, wenn von der Bestimmungseinrichtung bestimmt wird, dass der Drucker die Funktion des automatischen Nachweisens einer Papiergröße und/oder eines Papiertyps aufweist,
wobei, wenn von der Bestimmungseinrichtung bestimmt wird, dass der Drucker die Funktion des automatischen Nachweisens einer Papiergröße aufweist, die Steuereinrichtung betreibbar ist zum Anzeigen einer Nachricht auf der Benutzerschnittstelle, wonach für den Benutzer die Notwendigkeit der Auswahl einer Papiergröße entfällt.

2. Digitalkamera nach Anspruch 1, wobei, wenn von der Bestimmungseinrichtung bestimmt wird, dass der Drucker die Funktion des automatischen Nachweisens eines Papiertyps aufweist, die Steuereinrichtung betreibbar ist, um auf der Benutzerschnittstelle eine Nachricht anzuzeigen, wonach für den Benutzer die Notwendigkeit der Auswahl eines Papiertyps entfällt.

3. Digitalkamera nach Anspruch 1 oder 2, wobei die Empfangseinrichtung eine Drahtloskommunikationseinrichtung zum Empfangen der Leistungsfähigkeitsinformation vom Drucker durch drahtlose Kommunikation umfasst.

4. System mit einem Drucker, der direkt mit einer Digitalkamera nach einem der Ansprüche 1 bis 3 kommuniziert, wobei der Drucker umfasst:
eine Papiergrößennachweiseinrichtung (3032) zum automatischen Nachweisen einer Papiergröße; und
eine Sendeeinrichtung (4004) zum Senden von Leistungsfähigkeitsinformation an die Digitalkamera, wobei die Leistungsfähigkeitsinformation angibt, dass der Drucker eine Funktion des automatischen Nachweisens einer Papiergröße aufweist.

5. System mit einem Drucker, der direkt mit einer Digitalkamera nach einem der Ansprüche 1 bis 3 kommuniziert, wobei der Drucker umfasst:
eine Papiertypnachweiseinrichtung (3031) zum automatischen Nachweisen eines Papiertyps; und
eine Sendeeinrichtung (4004) zum Senden von Leistungsfähigkeitsinformation an die Digitalkamera, wobei die Leistungsfähigkeitsinformation angibt, dass der Drucker eine Funktion des automatischen Nachweisens eines Papiertyps aufweist.

6. System mit einem Drucker, der direkt mit einer Digitalkamera nach einem der Ansprüche 1 bis 3 kommuniziert, wobei der Drucker umfasst:
eine Papiergrößennachweiseinrichtung (3032) zum automatischen Nachweisen einer Papiergröße;
eine Papiertypnachweiseinrichtung (3031) zum automatischen Nachweisen eines Papiertyps; und
eine Sendeeinrichtung (4004) zum Senden von Leistungsfähigkeitsinformation an die Digitalkamera, wobei die Leistungsfähigkeitsinformation angibt, dass der Drucker eine Funktion des automatischen Nachweisens einer Papiergröße und eines Papiertyps aufweist.

7. System nach einem der Ansprüche 4 bis 6, wobei die Sendeeinrichtung eine Drahtloskommunikationseinrichtung zum Senden der Leistungsfähigkeitsinformation an die Digitalkamera nach einem der Ansprüche 1 bis 3 durch drahtlose Kommunikation umfasst.

8. Verfahren zum Betreiben einer Digitalkamera (3012), die in der Lage ist, direkt mit einem Drucker (1000) zu kommunizieren, umfassend:
einen Empfangsschritt zum Empfangen von Leistungsfähigkeitsinformation, die repräsentativ ist für Leistungen des Druckers, vom Drucker,
wobei das Verfahren weiterhin **gekennzeichnet ist durch**:
einen Bestimmungsschritt zum Bestimmen, entsprechend der Leistungsfähigkeitsinformation, ob der Drucker eine Funktion des automatischen Nachweisens einer Papiergröße und/oder eines Papiertyps aufweist oder nicht; und
einen Steuerschritt zum Steuern einer Benutzerschnittstelle (35) in Form einer Anzeige, um einem Benutzer mitzuteilen, dass der Drucker die Funktion des automatischen Nachweisens einer Papiergröße und/oder eines Papiertyps aufweist, wenn bestimmt wird, dass der Drucker die Funktion des automatischen Nachweisens einer Papiergröße und/oder eines Papiertyps aufweist,
wobei, wenn bestimmt wird, dass der Drucker die Funktion des automatischen Nachweisens einer Papiergröße aufweist, der Steuerschritt die Benutzerschnittstelle zum Anzeigen einer Nachricht auf der Benutzerschnittstelle steuert, wonach für den Benutzer die Notwendigkeit der Auswahl einer Papiergröße entfällt.

9. Verfahren nach Anspruch 8, wobei, wenn bestimmt wird, dass der Drucker die Funktion des automatischen Nachweisens eines Papiertyps aufweist, der Steuerschritt die Benutzerschnittstelle zum Anzeigen einer Nachricht auf der Benutzerschnittstelle steuert, wonach für den Benutzer die Notwendigkeit der Auswahl eines Papiertyps entfällt.

10. Verfahren nach Anspruch 8 oder 9, wobei die Digitalkamera die Leistungsfähigkeitsinformation vom Drucker durch drahtlose Kommunikation empfängt.

11. Speichermedium, das einen prozessor-implementierbaren Befehl speichert zum Steuern einer Kamera bei Ausführung, so dass sämtliche Schritte des Verfahrens nach einem der Ansprüche 8 bis 10 durchgeführt werden.

## Revendications

1. Appareil photo numérique (3012) capable de communiquer directement avec une imprimante (1000), comprenant :
un moyen de réception (41) destiné à recevoir de l'imprimante des informations de capacités représentatives de capacités de l'imprimante,
l'appareil photo numérique étant **caractérisé en ce qu'**il comprend en outre :
un moyen de détermination (31) destiné à déterminer, conformément aux informations de capacités, si oui ou non l'imprimante possède une fonction de détection automatique d'au moins l'un d'une taille de papier et d'un type de papier ; et
un moyen de commande destiné à commander une interface utilisateur (35) sous la forme d'un afficheur permettant d'informer un utilisateur du fait que l'imprimante possède la fonction de détection automatique de l'au moins un d'une taille de papier et d'un type de papier, s'il est déterminé par le moyen de détermination que l'imprimante possède la fonction de détection automatique de l'au moins un d'une taille de papier et d'un type de papier,
dans lequel, s'il est déterminé par le moyen de détermination que l'imprimante possède la fonction de détection automatique d'une taille de papier, le moyen de commande a pour fonction d'afficher sur l'interface utilisateur un message indiquant qu'il n'est pas nécessaire que l'utilisateur sélectionne une taille de papier.

2. Appareil photo numérique selon la revendication 1, dans lequel, s'il est déterminé par le moyen de détermination que l'imprimante possède la fonction de détection automatique d'un type de papier, le moyen de commande a pour fonction d'afficher sur l'interface utilisateur un message indiquant qu'il n'est pas nécessaire que l'utilisateur sélectionne un type de papier.

3. Appareil photo numérique selon la revendication 1 ou 2, dans lequel le moyen de réception comprend un moyen de communication sans fil destiné à recevoir les informations de capacités de l'imprimante par une communication sans fil.

4. Système comprenant une imprimante communiquant directement avec un appareil photo numérique selon l'une quelconque des revendications 1 à 3, l'imprimante comprenant :
un moyen de détection de taille de papier (3032) destiné à détecter automatiquement une taille de papier ; et
un moyen de transmission (4004) destiné à transmettre des informations de capacités à l'appareil photo numérique, les informations de capacités indiquant que l'imprimante possède une fonction de détection automatique d'une taille de papier.

5. Système comprenant une imprimante communiquant directement avec un appareil photo numérique selon l'une quelconque des revendications 1 à 3, l'imprimante comprenant :
un moyen de détection de type de papier (3031) destiné à détecter automatiquement un type de papier ; et
un moyen de transmission (4004) destiné à transmettre des informations de capacités à l'appareil photo numérique, les informations de capacités indiquant que l'imprimante possède une fonction de détection automatique d'un type de papier.

6. Système comprenant une imprimante communiquant directement avec un appareil photo numérique selon l'une quelconque des revendications 1 à 3, l'imprimante comprenant :
un moyen de détection de taille de papier (3032) destiné à détecter automatiquement une taille de papier ; et
un moyen de détection de type de papier (3031) destiné à détecter automatiquement un type de papier ; et
un moyen de transmission (4004) destiné à transmettre des informations de capacités à l'appareil photo numérique, les informations de capacités indiquant que l'imprimante possède une fonction de détection automatique d'une taille de papier et d'un type de papier.

7. Système selon l'une quelconque des revendications 4 à 6, dans lequel le moyen de transmission comprend un moyen de communication sans fil destiné à transmettre les informations de capacités à l'appareil photo numérique selon l'une quelconque des revendications 1 à 3, par une communication sans fil.

8. Procédé de mise en fonctionnement d'un appareil photo numérique (3012) capable de communiquer directement avec une imprimante (1000), comprenant :
une étape de réception consistant à recevoir de l'imprimante des informations de capacités représentatives de capacités de l'imprimante,
le procédé étant **caractérisé en ce qu'**il comprend en outre :
une étape de détermination consistant à déterminer, conformément aux informations de capacités, si oui ou non l'imprimante possède une fonction de détection automatique d'au moins l'un d'une taille de papier et d'un type de papier ; et
une étape de commande consistant à commander une interface utilisateur (35) sous la forme d'un afficheur pour indiquer à un utilisateur que l'imprimante possède la fonction de détection automatique de l'au moins un d'une taille de papier et d'un type de papier, s'il est déterminé que l'imprimante possède la fonction de détection automatique de l'au moins un d'une taille de papier et d'un type de papier,
dans lequel, s'il est déterminé que l'imprimante possède la fonction de détection automatique d'une taille de papier, l'étape de commande commande l'interface utilisateur pour afficher un message sur l'interface utilisateur afin d'indiquer qu'il n'est pas nécessaire que l'utilisateur sélectionne une taille de papier.

9. Procédé selon la revendication 8, dans lequel, s'il est déterminé que l'imprimante possède la fonction de détection automatique d'un type de papier, l'étape de commande commande l'interface utilisateur pour afficher un message sur l'interface utilisateur afin d'indiquer qu'il n'est pas nécessaire que l'utilisateur sélectionne un type de papier.

10. Procédé selon la revendication 8 ou 9, dans lequel l'appareil photo numérique reçoit les informations de capacités de l'imprimante par une communication sans fil.

11. Support de stockage stockant des instructions pouvant être exécutées par un processeur pour commander un appareil photo lors de l'exécution afin de mettre en oeuvre toutes les étapes d'un procédé selon l'une quelconque des revendications 8 à 10.
